(19)

**Europäisches Patentamt**
**European Patent Office**
**Office européen des brevets**

(11) **EP 4 080 722 B1**

(12) **EUROPEAN PATENT SPECIFICATION**

(45) Date of publication and mention
of the grant of the patent:
**27.12.2023 Bulletin 2023/52**

(21) Application number: **22169160.3**

(22) Date of filing: **21.04.2022**

(51) International Patent Classification (IPC):
**H02J 7/00** (2006.01)

(52) Cooperative Patent Classification (CPC):
**H02J 7/0018; H02M 3/1582; H02M 7/49;**
H02J 3/32; H02M 1/007; H02M 1/0077; Y02E 10/56;
Y02E 70/30

(54) **ENERGY STORAGE SYSTEM, BALANCING CONTROL METHOD FOR ENERGY STORAGE SYSTEM, AND PHOTOVOLTAIC POWER SYSTEM**

ENERGIESPEICHERSYSTEM, SYMMETRIEREGELUNGSVERFAHREN FÜR ENERGIESPEICHER UND PHOTOVOLTAISCHES LEISTUNGSSYSTEM

SYSTÈME DE STOCKAGE D'ÉNERGIE, PROCÉDÉ DE COMMANDE D'ÉQUILIBRAGE POUR SYSTÈME DE STOCKAGE D'ÉNERGIE ET SYSTÈME DE PUISSANCE PHOTOVOLTAÏQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2021 CN 202110443465**

(43) Date of publication of application:
**26.10.2022 Bulletin 2022/43**

(73) Proprietor: **Huawei Digital Power Technologies Co., Ltd.**
**Shenzhen, 518043 (CN)**

(72) Inventors:
• **Wu, Zhipeng**
**Shenzhen, 518129 (CN)**
• **Zhou, He**
**Shenzhen, 518129 (CN)**
• **Wang, Zhigang**
**Shenzhen, 518129 (CN)**

(74) Representative: **Thun, Clemens**
**Mitscherlich PartmbB**
**Patent- und Rechtsanwälte**
**Karlstraße 7**
**80333 München (DE)**

(56) References cited:
**EP-A1- 3 940 914       EP-A2- 2 779 348**
**US-A1- 2014 042 815**

• **MA ZHAN ET AL: "Multilayer SOH Equalization Scheme for MMC Battery Energy Storage System", IEEE TRANSACTIONS ON POWER ELECTRONICS, INSTITUTE OF ELECTRICAL AND ELECTRONICS ENGINEERS, USA, vol. 35, no. 12, 1 May 2020 (2020-05-01), pages 13514-13527, XP011802926, ISSN: 0885-8993, DOI: 10.1109/TPEL.2020.2991879 [retrieved on 2020-08-04]**

## Description

### TECHNICAL FIELD

This application relates to the field of energy storage systems, and in particular, to an energy storage system, a balancing control method for an energy storage system, and a photovoltaic power system.

### BACKGROUND

With shortage of energy and aggravation of environmental pollution problems in modern society, electric energy generation manners such as photovoltaic power generation and wind energy generation are currently widely used. In addition, with development of an electrochemical cell technology and a dramatic increase in a production capacity, costs of electrochemical cells decrease, bringing an opportunity for electrochemical cells to participate in electric energy storage of a new energy generation system. Because an energy storage system to which electrochemical cells are applied is characterized by flexibility, charging/discharging controllability, a quick response capability, high energy density, and the like, the energy storage system to which electrochemical cells are applied is increasingly widely used in various steps such as electric energy generation, transmission, transformation, distribution, and consumption, and a capacity of the energy storage system is also increasing. A high-voltage cascaded energy storage system is increasingly valued by the energy storage industry because the high-voltage cascaded energy storage system can implement transformer-free direct access of 6 to 35 kilovolts (KV) and a standalone-system capacity of a level of 5 to 30 megawatts (MW).

However, as a capacity of an energy storage system increases, a quantity of batteries included in a battery cluster increases. Because of inconsistency of electrochemical cells, a large quantity of batteries are integrated into one system. Because of inconsistency of factory performance of batteries and a difference in running conditions of the batteries, states of health (State of Health, SOH) of the batteries are different, and a Cannikin law of batteries becomes prominent. In other words, a battery with a relatively small SOH first completes charging or discharging, and a battery capacity cannot be fully utilized.

To alleviate the foregoing problem, electric energy of batteries may be balanced. Currently, battery-level passive balancing is mostly used in high-voltage cascaded energy storage systems. A principle of passive balancing is as follows: A balancing resistor is connected in parallel to a to-be-balanced battery by using a switch. After the switch is closed, the balancing resistor consumes electric energy, so that electric energy of the battery and another battery is balanced. A balancing current of passive balancing is usually less than or equal to 1 ampere (A), and a capacity of a battery usually reaches hundreds of ampere hours (Ah). Therefore, it is difficult to achieve quick electric energy balancing only by using a quite small balancing current, in other words, an electric energy balancing capability of this manner is quite limited, and the energy storage system is more susceptible to a Cannikin law of batteries

In the prior art, A ZHAN ET AL, "Multilayer SOH Equalization Scheme for MMC Battery Energy Storage System", IEEE TRANSACTIONS ON POWER ELECTRONICS, INSTITUTE OF ELECTRICAL AND ELECTRONICS ENGINEERS, USA, vol. 35, no. 12, doi:10.1109/TPEL.2020.2991879, ISSN 0885-8993, (20200501), pages 13514 - 13527, (20200804), discusses the idea of balancing batteries of a battery energy storage system considering the SOH of the batteries, wherein a passive as well as an active equalization of the battery cells is disclosed.

Balancing of batteries in a battery cluster is also discussed in US 2014/0042815 A1 and EP 2 779 348 A2.

### SUMMARY

Based on the foregoing, this application provides an energy storage system and a balancing control method for an energy storage system, to improve an electric energy balancing capability of the energy storage system and alleviate impact on the energy storage system that is caused by a Cannikin law of batteries In particular, the present invention is defined by the subject matter of the independent claims wherein preferred embodiments are subject matter of the dependent claims.

The energy storage system of the photovoltaic power system can implement electric energy balancing between battery packs, and a balancing current greatly increases and can reach a 100-ampere level, so that an electric energy balancing capability is improved, and impact on the energy storage system that is caused by a Cannikin law of batteries is effectively alleviated.

### DESCRIPTION OF DRAWINGS

FIG. 1 is a schematic diagram of an example new energy generation system according to this application;

FIG. 2A is a schematic diagram of an energy storage system according to an embodiment of this application;

FIG. 2B is a schematic diagram of another energy storage system according to an embodiment of this application;

FIG. 3 is a schematic diagram of a second end of a power conversion circuit according to an example not covered by the claims;

FIG. 4 is a schematic diagram of a second end of another power conversion circuit according to an example not covered by the claims ;

FIG. 5 is a schematic diagram of a second end of a power conversion circuit according to an embodiment of this application;

FIG. 6 is a schematic diagram of a second end of another power conversion circuit according to an embodiment of this application;

FIG. 7 is a flowchart of a balancing control method for an energy storage system according to an embodiment of this application;

FIG. 8 is a flowchart of another balancing control method for an energy storage system according to an embodiment of this application;

FIG. 9 is a flowchart of still another balancing control method for an energy storage system according to an embodiment of this application;

FIG. 10 is a flowchart of yet another balancing control method for an energy storage system according to an embodiment of this application;

FIG. 11 is a flowchart of still yet another balancing control method for an energy storage system according to an embodiment of this application;

FIG. 12 is a schematic diagram of a photovoltaic power system according to an embodiment of this application;

FIG. 13 is a schematic diagram of another photovoltaic power system according to an embodiment of this application; and

FIG. 14 is a schematic diagram of still another photovoltaic power system according to an embodiment of this application.

## DESCRIPTION OF EMBODIMENTS

To enable a person skilled in the art to better understand the technical solutions provided in embodiments of this application, the following first describes an application scenario of a new energy generation system.

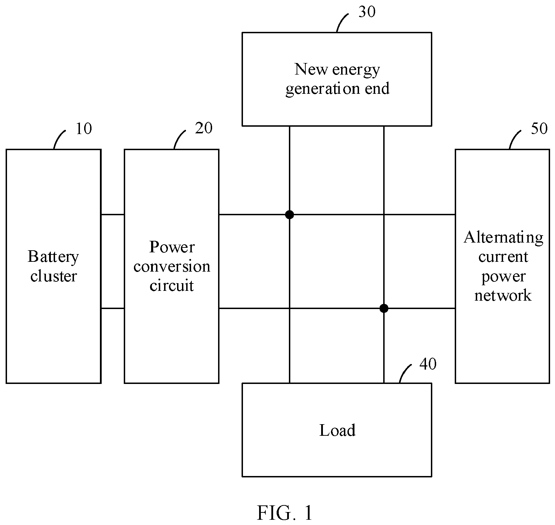

FIG. 1 is a schematic diagram of an example new energy generation system according to this application.

The new energy generation system includes a battery cluster 10, a power conversion circuit 20, a new energy generation end 30, and a load 40.

The new energy generation end 30 is configured to output an alternating current. Because the new energy generation end 30 is characterized by fluctuation and uncertainty, a power yield of the new energy generation end 30 fluctuates. When the alternating current output by the new energy generation end 30 is greater than an electrical requirement of an alternating current power network 50, excess electric energy is converted into a direct current by using the power conversion circuit 20 for charging the battery cluster 10. When the alternating current output by the new energy generation end 30 is less than an electrical requirement of an alternating current power network 50, the power conversion circuit 20 converts, into an alternating current, a direct current output by the battery cluster 10, and then outputs the alternating current to the alternating current power network 50, so that the alternating current power network 50 tends to be stable.

In an example in which the new energy generation end 30 is a photovoltaic power generation end, the new energy generation end 30 includes a photovoltaic module and a direct current (Direct Current, DC)/alternating current (Alternating Current, AC) conversion circuit (which may also be referred to as an inverter circuit or an inverter). The photovoltaic module generates a direct current by using optical energy, and the DC/AC conversion circuit converts the direct current into an alternating current, and then outputs the alternating current to the alternating current power network 50 and/or charges the battery cluster 10.

The load 40 is an electrical device of the new energy generation system. The load 40 includes a temperature control system, and specifically includes an air conditioner and a fan. The temperature control system and the battery cluster are usually disposed in an energy storage container. The load 40 may further include another device such as an illumination device. This is not specifically limited in this embodiment of this application.

The battery cluster 10 includes a plurality of battery packs connected in series, and each battery pack includes a plurality of batteries connected in series or connected in series and in parallel. The battery may be a ternary lithium battery, a lead-acid battery, a lithium iron phosphate battery, a lithium-titanate battery, a lead-carbon battery, a supercapacitor, or another type, or a combination of the foregoing types. This is not specifically limited in this application.

Electric energy of batteries in the battery cluster 10 is balanced to alleviate impact on an energy storage system that is caused by a Cannikin law of batteries. However, during implementation of a currently used passive balancing solution, a balancing current is usually less than or equal to 1 A. For a current large battery with a capacity of hundreds of Ah and a high-voltage energy storage system of an MWh level, an electric energy balancing capability of this manner is quite limited. Consequently, when the battery cluster is charged, a charge current of the entire cluster can be limited only based on a battery with a highest SOC or a highest voltage in the batteries of the entire cluster. When the battery cluster discharges, a discharge current of the entire cluster can be limited only based on a battery with a lowest SOC or a lowest voltage in the batteries of the entire cluster. Therefore, a battery capacity cannot be fully utilized.

To resolve the foregoing problem, this application provides an energy storage system, a balancing control method for an energy storage system, and a photovoltaic power system. A balancing bus is added to a second end of a power conversion circuit, and each battery pack is connected to the balancing bus by using one direct current/direct current conversion circuit. A controller controls a working status of each direct current/direct current conversion circuit, so that electric energy of a battery pack is transferred to the balancing bus by using the direct current/direct current conversion circuit, and is then transferred from the balancing bus to another battery pack by using another direct current/direct current conversion circuit. In this way, electric energy of the battery packs is balanced. Because battery pack-level electric energy balancing is performed, a balancing current greatly increases and can reach a 100-ampere level, so that an electric energy balancing capability is improved. In addition, the controller simultaneously controls a plurality of direct current/direct current conversion circuits, so that electric energy balancing between a plurality of battery packs can be implemented, thereby further improving the electric energy balancing capability. Therefore, electric energy balancing can be quickly implemented, and impact on the energy storage system that is caused by a Cannikin law of batteries can be effectively alleviated.

The following describes the technical solutions of this application in detail with reference to the accompanying drawings.

Terms such as "first" and "second" in the following descriptions of this application are merely used for a purpose of description, and cannot be understood as an indication or implication of relative importance or implicit indication of a quantity of indicated technical features.

In this application, unless otherwise specified and limited, the term "connection" should be understood in a broad sense. For example, the term "connection" may be fastening, a detachable connection, or integration, or may be a direct connection, or may be an indirect connection using an intermediate medium.

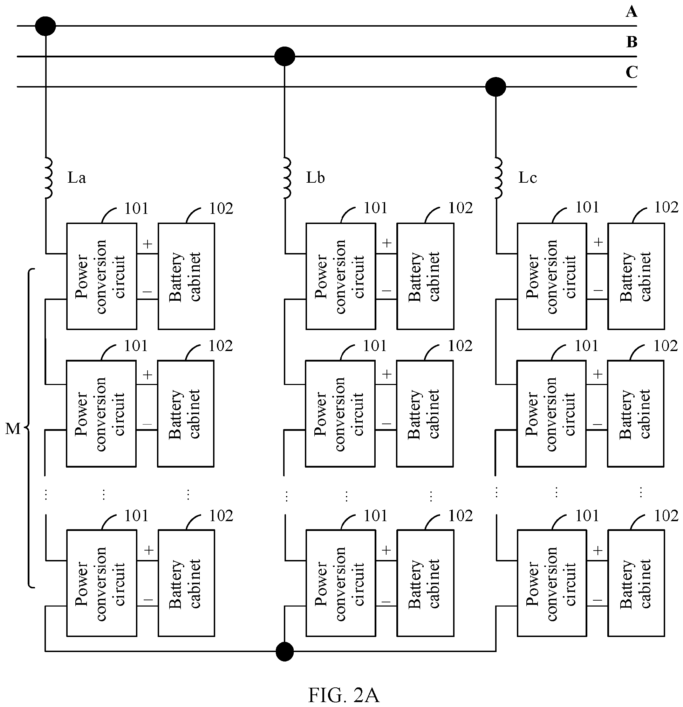

FIG. 2A is a schematic diagram of an energy storage system according to an embodiment of this application.

The energy storage system shown in the figure includes a controller (not shown in the figure) and three power conversion branches.

The energy storage system can access an alternating current power network without a transformer. In some embodiments, a voltage level of the alternating current power network may be up to 6 to 35 KV.

Each power conversion branch includes M power conversion circuits 101, where M is an integer greater than or equal to 1, and a value or quantity of M is specifically related to a voltage level of the energy storage system. In actual application, M is usually greater than 1.

When M is greater than 1, in other words, each power conversion branch includes at least two power conversion circuits 101, first ends of the M power conversion circuits 101 are connected in series.

Specifically, after first ends of M power conversion circuits 101 in a first power conversion branch are connected in series, a formed first end is connected to a phase A of the alternating current power network by using an inductor La, and a formed second end is connected to a neutral point N. After first ends of M power conversion circuits 101 in a second power conversion branch are connected in series, a formed first end is connected to a phase B of the alternating current power network by using an inductor Lb, and a formed second end is connected to the neutral point N. After first ends of M power conversion circuits 101 in a third power conversion branch are connected in series, a formed first end is connected to a phase C of the alternating current power network by using an inductor Lc, and a formed second end is connected to the neutral point N.

A second end of the power conversion circuit 101 shown in the figure is connected to a battery cabinet 102. The battery cabinet 102 is configured to place a battery cluster, and one battery cabinet includes at least one battery cluster. In actual application, the battery cabinet 102 may also be replaced with an open battery shelf, and the open battery shelf is configured to dispose a battery cluster, but needs to meet a corresponding high-voltage insulation requirement.

The power conversion circuit 101 is configured to: convert a direct current provided by the battery cluster into an alternating current and then transmit the alternating current to the alternating current power network, or convert an alternating current obtained from the alternating current power network into a direct current and then charge the battery cluster. Therefore, the power conversion system is a bidirectional direct current/alternating current (Alternating Current, AC) converter. Because a port voltage of a battery changes with an energy storage capacity, a port output voltage of the battery cluster is a widely ranging output voltage. Therefore, to match a change range of the port voltage of the battery cluster, the power conversion circuit 101 is usually designed with an input/output capability of a wide range.

A specific implementation of the power conversion circuit 101 is not limited in this embodiment of this application.

In some embodiments, the power conversion circuit 101 may use an H-bridge topology. In this case, the power conversion circuit 101 includes a power switch component, and the power switch component may be an insulated gate bipolar transistor (Insulated Gate Bipolar Transistor, IGBT), a metal-oxide-semiconductor field-effect transistor (Metal Oxide Semiconductor Filed Effect Transistor, MOSFET), a silicon carbide metal-oxide-semiconductor field-effect transistor (Silicon Carbide Metal Oxide Semiconductor, SiC MOSFET), a mechanical switch, or any combination of the foregoing.

Taking an implementation in which the three power conversion branches are connected through a star connection as an example, a voltage $U_{out}$ of a first end of each power conversion circuit 101 may be determined by using the following formula:

$$U_{out} = \frac{U_g}{\sqrt{3} \cdot M} \tag{1},$$

where

$U_g$ is a rated voltage of the power network, and M is a quantity of power conversion circuits 101 in one power conversion branch.

FIG. 2A shows the implementation in which the three power conversion branches of the energy storage system are connected through a star connection. To be specific, the energy storage system further includes a three-phase alternating current bus, a first end of each of the three power conversion branches is connected to a one-phase alternating current bus, and second ends of the three power conversion branches are connected to each other.

It may be understood that in actual application, the three power conversion branches of the energy storage system may be implemented through a delta connection. The following provides detailed descriptions.

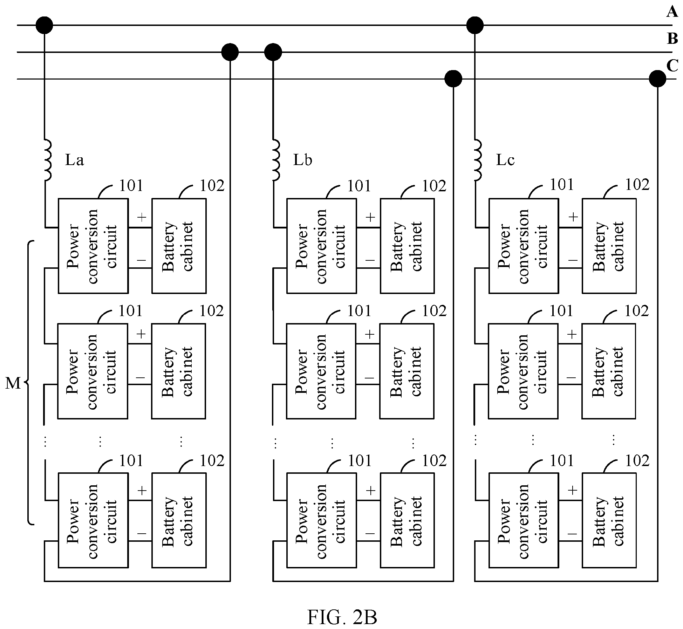

FIG. 2B is a schematic diagram of another energy storage system according to an embodiment of this application.

In this case, three power conversion branches are separately connected between alternating current buses of every two phases. In other words, the three power conversion branches are respectively connected between a phase A and a phase B, the phase A and a phase C, and the phase B and the phase C.

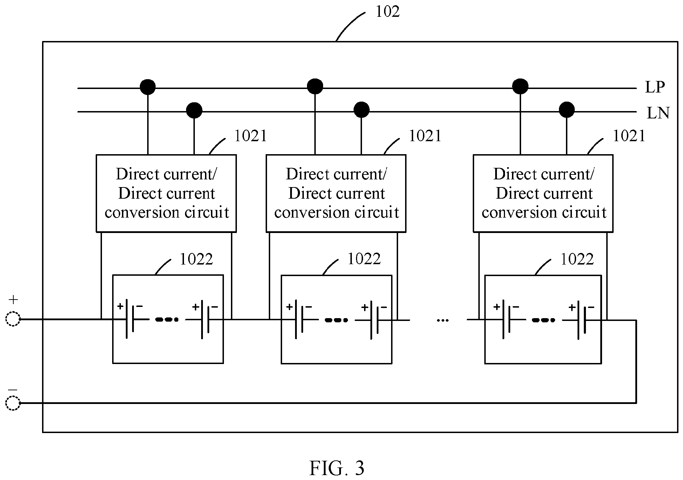

FIG. 3 is a schematic diagram of a second end of a power conversion circuit according to an embodiment of this application.

A battery cabinet at the second end of the power conversion circuit includes one battery cluster, the battery cluster includes at least two energy storage modules connected in series, each energy storage module includes one direct current/direct current conversion circuit 1021 and one battery pack 1022, and each battery pack 1022 includes at least two batteries. The batteries in each battery pack 1022 may be connected in series or connected in series and in parallel. This is not specifically limited in this embodiment of this application.

After positive and negative ports of the battery packs 1022 are sequentially connected in series, a formed positive port (represented by "+" in FIG. 3) of the battery cluster and a formed negative port (represented by "-" in FIG. 3) of the battery cluster are connected to the second end of the power conversion circuit.

In actual application, a total output voltage of the battery cluster is usually designed to be greater than $\sqrt{2}$ times of a voltage $U_{out}$ of a first end of the power conversion circuit.

The other group of output ends of each battery pack is further connected to an input end of a corresponding direct current/direct current conversion circuit 1021, and an output end of each direct current/direct current conversion circuit is connected in parallel to a balancing bus. The balancing bus includes a positive bus LP and a negative bus LN.

The direct current/direct current conversion circuit 1021 has a bidirectional voltage step-up/step-down function, to be specific, can step up a voltage provided by the battery pack and then output an obtained voltage to the balancing bus, or step down a voltage provided by the balancing bus and then output an obtained voltage to the battery pack.

The direct current/direct current conversion circuit 1021 has an electrical isolation capability, and meets an insulation requirement of voltages of batteries in the entire cluster. A voltage on a side on which the direct current/direct current conversion circuit 1021 is connected to the battery pack 1022 is consistent with a voltage of the battery pack 1022, and usually ranges from dozens to hundreds of volts. A specific value is related to a quantity of batteries in the battery pack 1022 and a battery connection manner.

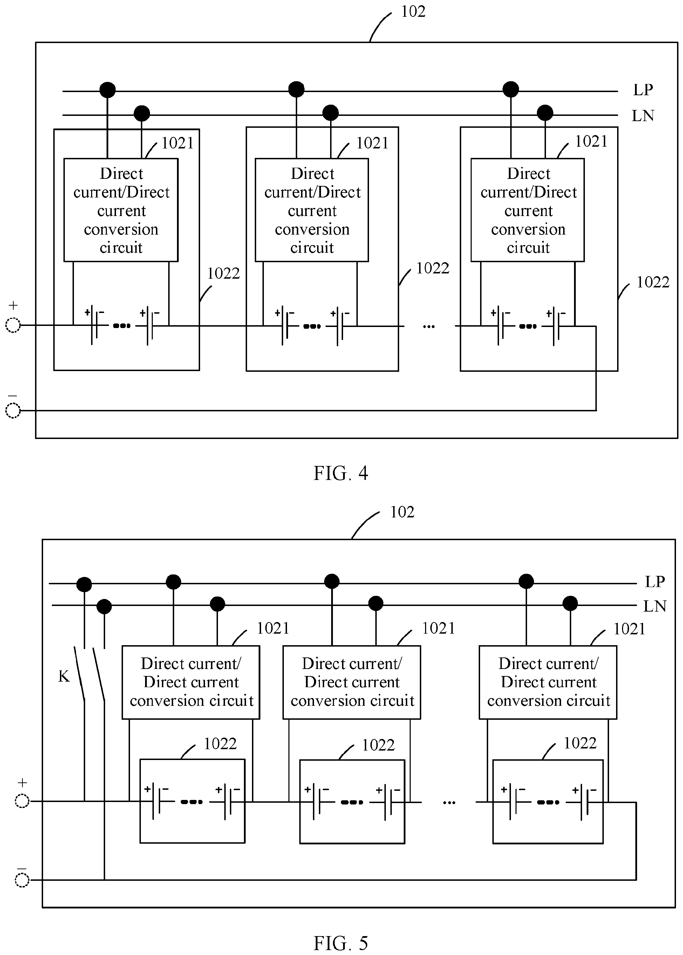

FIG. 4 is a schematic diagram of a second end of another power conversion circuit according to an embodiment of this application.

FIG. 4 differs from FIG. 3 in that a direct current/direct current conversion circuit 1021 is integrated into a battery pack 1022. For other descriptions, refer to the foregoing descriptions. Details are not described herein again.

A controller is configured to control a working status of each direct current/direct current conversion circuit 1021, so that electric energy of battery packs 1022 in a battery cluster is balanced.

In actual application, the controller sends a control signal to a power switch component in each direct current/direct current conversion circuit 1021 to control a working status of the power switch component. In a possible implementation, the control signal is a pulse width modulation (Pulse width modulation, PWM) signal.

The controller may be an application-specific integrated circuit (Application-Specific Integrated Circuit, ASIC), a programmable logic device (Programmable Logic Device, PLD), a digital signal processor (Digital Signal Processor, DSP), or a combination thereof. The PLD may be a complex programmable logic device (Complex Programmable Logic Device, CPLD), a field-programmable gate array (Field-Programmable Gate Array, FPGA), a generic array logic (Generic Array Logic, GAL), or any combination thereof.

The controller may be a one-level controller or a multi-level controller. When the controller is a multi-level controller, information exchange may be performed between an upper-level controller and a lower-level controller, and the upper-level controller can control the lower-level controller. The controller may be independently integrated into a printed circuit board (Printed circuit board, PCB), or the controller may be physically divided into a plurality of parts, and the plurality of parts are separately disposed on PCBs at different locations of the energy storage system. The parts cooperate to implement a control function. This is not specifically limited in this embodiment of this application.

In the solution provided in this embodiment of this application, the balancing bus is added to the second end of the power conversion circuit, and each battery pack is connected to the balancing bus by using one direct current/direct current conversion circuit. The controller controls the working status of each direct current/direct current conversion circuit, so that electric energy of a battery pack is transferred to the balancing bus by using the direct current/direct current conversion circuit, and is then transferred from the balancing bus to another battery pack by using another direct current/direct current conversion circuit. In this way, electric energy of the battery packs is balanced. Because battery pack-level electric energy balancing is performed, in comparison with a solution of performing passive balancing on batteries, a balancing current greatly increases and can reach a 100-ampere level, so that an electric energy balancing capability is improved. In addition, the controller simultaneously controls a plurality of direct current/direct current conversion circuits, so that electric energy balancing between a plurality of battery packs can be implemented, thereby further improving the electric energy balancing capability. Therefore, electric energy balancing can be quickly implemented, and impact on the energy storage system that is caused by a Cannikin law of batteries can be effectively alleviated.

The following describes a process of implementing electric energy balancing with reference to a specific implementation.

A controller may be specifically implemented as a multi-level controller. The controller specifically includes a first control unit and a second control unit.

In some embodiments, the first control unit is a battery control unit (Battery Control Unit, BCU), and the first control unit and a power conversion circuit are integrated together. The second control unit is a battery monitoring unit (Battery Monitoring Unit, BMU), and a quantity of second control units is the same as a quantity of battery packs 1022 in a battery cluster. Each second control unit obtains a first parameter value of one battery pack, sends the first parameter value to the first control unit, and controls one corresponding direct current/direct current conversion circuit according to a control instruction sent by the first control unit. The first control unit is configured to: determine a first to-be-balanced battery pack and a second to-be-balanced battery pack based on obtained first parameter values, and send control instructions to the second control units.

The first parameter value may be a state of charge (State of Charge, SOC) value or a voltage value. In the following descriptions of this application, an example in which the first parameter value is an SOC value is used for description. When the first parameter value is a voltage value, a principle is similar. Details are not repeatedly described in this application.

The following first describes a principle of controlling, by a controller, an energy storage system to implement electric energy balancing between battery packs.

Still referring to FIG. 3 or FIG. 4, the following specifically describes a working principle of the controller.

A battery cluster includes n battery packs, and second control units obtain $SOC_i$ of the corresponding battery packs, where i=1, 2, ..., and n.

The second control units send obtained $SOC_i$ to a first control unit.

The first control unit determines that an average value of the SOC values of the battery packs in the battery cluster is a first average value, and the first average value A1 is determined by using the following formula:

$$A1 = \frac{\sum SOC}{n} \qquad (1)$$

The first control unit determines first deviations Xi between the SOC values of the battery packs and the first average value A1:

$$Xi = SOCi - \frac{\sum SOCi}{n} \qquad (2)$$

The first control unit determines whether there is currently a battery pack whose corresponding Xi falls beyond a preset threshold range [a, b], where b is a first preset threshold, a is a second preset threshold, and the first preset threshold is greater than the second preset threshold. When all Xi falls within the threshold range [a, b], no electric energy balancing is performed; otherwise, balancing control is enabled.

When balancing control is enabled, the first control unit determines that a battery pack for which a first deviation between an SOC and the first average value A1 is greater than the first preset threshold is a first to-be-balanced battery pack, determines that a battery pack for which a first deviation between an SOC and the first average value A1 is less than the second preset threshold is a second to-be-balanced battery pack, and sends a control instruction to the second control unit, so that the second control unit controls a direct current/direct current conversion circuit connected to the first to-be-balanced battery pack and a direct current/direct current conversion circuit connected to the second to-be-balanced battery pack. It should be noted that the first deviation is not an absolute value, in other words, the first deviation may be positive or negative.

In a possible implementation, during balancing control, the direct current/direct current conversion circuit connected to the first to-be-balanced battery pack may be controlled to be a voltage source for providing a reference voltage of a balancing bus, the direct current/direct current conversion circuit connected to the second to-be-balanced battery pack may be controlled to be a current source, and then magnitude of a balancing current may be controlled by controlling the direct current/direct current conversion circuit, so that a current of the first to-be-balanced battery pack flows to the second to-be-balanced battery pack through the balancing bus.

In another possible implementation, during balancing control, alternatively, the direct current/direct current conversion circuit connected to the first to-be-balanced battery pack may be controlled to be a current source, and the direct current/direct current conversion circuit connected to the second to-be-balanced battery pack may be controlled to be a voltage source.

There may be one or more first to-be-balanced battery packs, and there may be one or more second to-be-balanced battery packs. In other words, one-to-one balancing, one-to-many balancing, many-to-one balancing, and many-to-many balancing of battery packs may be implemented.

A voltage selected for the balancing bus is determined by a voltage output by the direct current/direct current conversion circuit to the balancing bus. In other words, the voltage of the balancing bus depends on an optimal conversion efficiency point of the direct current/direct current conversion circuit for a purpose of reducing electric energy balancing loss.

In actual application, to reduce a volume and costs of the balancing bus, the voltage output by the direct current/direct current conversion circuit to the balancing bus is greater than a voltage input by the battery pack to the direct current/direct current conversion circuit, and a voltage range of the balancing bus may be controlled to be (the voltage output by the battery pack to the direct current/direct current conversion circuit, a voltage of the battery cluster). In addition, generally, the direct current/direct current conversion circuit is designed to work at the optimal conversion efficiency point.

The foregoing balancing control may be performed when the energy storage system is charged, discharges, or is silent (neither is charged nor discharges). This is not specifically limited in this embodiment of this application.

The following describes another implementation in which a controller controls an energy storage system to implement electric energy balancing between battery packs.

A battery cluster includes n battery packs, and second control units obtain $SOC_i$ of the corresponding battery packs, where i=1, 2, ..., and n.

The second control units send obtained $SOC_i$ to a first control unit.

The first control unit obtains a difference d between a maximum value and a minimum value in the SOCs of the battery packs. The difference d is specifically shown in the following formula:

$$d = SOC_{max} - SOC_{min} \qquad\qquad (3)$$

When the difference d is greater than or equal to a third preset threshold, the first control unit determines that a battery pack with a maximum first parameter value is a first to-be-balanced battery pack, and determines that a battery pack with a minimum first parameter value is a second to-be-balanced battery pack. The first control unit controls a direct current/direct current conversion circuit connected to the first to-be-balanced battery pack and a direct current/direct current conversion circuit connected to the second to-be-balanced battery pack, so that electric energy of the battery packs is balanced.

The following describes a principle of controlling, by a controller, an energy storage system to implement high-power balancing between a battery pack and a battery cluster.

FIG. 5 is a schematic diagram of a second end of still another power conversion circuit according to an embodiment of this application.

FIG. 5 differs from FIG. 3 in that the second end of the power conversion circuit further includes a controllable switch K.

A balancing bus is connected to a bus of a battery cluster by using the controllable switch K, in other words, is connected to an output end of the battery cluster.

The controller further controls the controllable switch K based on first parameter value of battery packs, to implement high-power balancing between the battery packs and the battery cluster.

When the controllable switch K is open, an implementation of balancing control is consistent with that in the foregoing descriptions, and details are not described herein again.

The following describes a control policy when the controllable switch K is closed.

As described above, the battery cluster includes n battery packs, and second control units obtain $SOC_i$ of the corresponding battery packs, where i=1, 2, ..., and n. The second control units send obtained $SOC_i$ to a first control unit. A first control unit determines that an average value of the SOC values of the battery packs in the battery cluster is a first average value A1. The first control unit determines first deviations Xi between the SOC values of the battery packs and the first average value A1, determines that a battery pack for which a first deviation between an SOC and the first average value A1 is greater than a first preset threshold is a first to-be-balanced battery pack, and determines that a battery pack for which a first deviation between an SOC and the first average value A1 is less than a second preset threshold is a second to-be-balanced battery pack.

When an energy storage module discharges and a first to-be-balanced battery pack exists, the first control unit controls the controllable switch to be closed. In this case, a voltage of the balancing bus is clamped to be equal to a voltage of a bus of the battery cluster. The second control unit controls a direct current/direct current conversion circuit corresponding to the first to-be-balanced battery pack to be a current source, and controls a current to flow from the first to-be-balanced battery pack to the bus of the battery cluster.

When the energy storage module is charged and a second to-be-balanced battery pack exists, the first control unit controls the controllable switch to be closed. In this case, the voltage of the balancing bus is clamped to be equal to the voltage of the bus of the battery cluster. The second control unit controls a direct current/direct current conversion circuit corresponding to the second to-be-balanced battery pack to be a current source, and controls a current to flow from the bus of the battery cluster to the first to-be-balanced battery pack.

When a plurality of battery packs meet a balancing condition, the first control unit may indicate magnitude of balancing currents of direct current/direct current conversion circuits based on magnitude of first deviations. The following provides detailed descriptions.

When the energy storage module discharges and at least two first to-be-balanced battery packs exist, the first control unit determines, based on magnitude of first deviations corresponding to the first to-be-balanced battery packs, magnitude of balancing currents of direct current/direct current conversion circuits connected to the first to-be-balanced battery packs. The magnitude of the balancing currents is positively correlated with the magnitude of the first deviations, in other words, a larger first deviation corresponding to the first to-be-balanced battery pack indicates a higher balancing current.

When the energy storage module is charged and at least two second to-be-balanced battery packs exist, the first control unit determines, based on magnitude of first deviations corresponding to the second to-be-balanced battery packs, magnitude of balancing currents of direct current/direct current conversion circuits connected to the second to-be-balanced battery packs. The magnitude of the balancing currents is positively correlated with the magnitude of the first deviations.

For the implementation in which the first to-be-balanced battery pack and the second to-be-balanced battery pack are determined based on the difference d in the foregoing descriptions, when the energy storage module discharges and a first to-be-balanced battery pack exists, the first control unit controls the controllable switch K to be closed, and in this case, the voltage of the balancing bus is clamped to be equal to the voltage of the bus of the battery cluster, and the second control unit controls a direct current/direct current conversion circuit corresponding to the first to-be-balanced battery pack to be a current source, and controls a current to flow from the first to-be-balanced battery pack to the bus of the battery cluster. When the energy storage module is charged and a second to-be-balanced battery pack exists, the first control unit controls the controllable switch K to be closed. In this case, the voltage of the balancing bus is clamped to be equal to the voltage of the bus of the battery cluster. The second control unit controls a direct current/direct current conversion circuit corresponding to the second to-be-balanced battery pack to be a current source, and controls a current to flow from the bus of the battery cluster to the first to-be-balanced battery pack.

The following describes a principle of controlling, by a controller, an energy storage system to implement high-power balancing between battery clusters. In the following descriptions, an example in which a second end of one power conversion circuit is connected to two battery clusters is used. When a second end of one power conversion circuit is connected to at least three battery clusters, a principle is similar. Details are not repeatedly described in embodiments of this application.

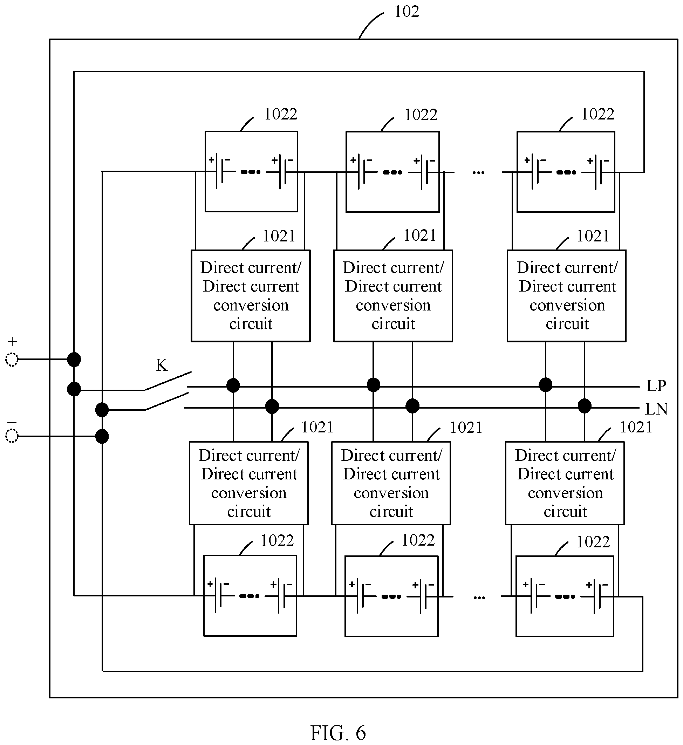

FIG. 6 is a schematic diagram of a second end of yet another power conversion circuit according to an embodiment of this application.

Buses of two battery clusters are connected in parallel and are then connected to a balancing bus by using a controllable switch K.

In this case, a first controller obtains SOC values of the two battery clusters, and the SOC values are $SOC_1$ and $SOC_2$.

The first controller determines that an average value of the SOC values of the battery clusters is a second average value A2.

The first control unit determines second deviations Yi between the SOC values of the battery clusters and the second average value A2. When there is a second deviation Yi greater than a fourth preset threshold, it indicates that electric energy between the battery clusters is unbalanced, and balancing control between the battery clusters needs to be performed.

In this case, in a possible implementation, the first control unit controls the controllable switch K to be open, and a second control unit controls a direct current/direct current conversion circuit of a battery cluster whose SOC value is greater than the second average value to be a voltage source, controls a direct current/direct current conversion circuit of a battery cluster whose SOC value is less than the second average value to be a current source, and controls a current to flow from the battery cluster whose SOC value is greater than the second average value to the battery cluster whose SOC value is less than the second average value, to implement electric energy balancing between the battery clusters.

In this case, the SOC value may also be replaced with a voltage value.

When a first parameter value is an SOC value, in another possible implementation, the first control unit controls the controllable switch K to be closed, and determines that a battery cluster whose SOC value is greater than the second average value is a to-be-balanced battery cluster. The first control unit further determines that battery packs that are in the to-be-balanced battery cluster and whose SOC values are greater than the second average value are third to-be-balanced battery packs, so that a second control unit controls direct current/direct current conversion circuits connected to the third to-be-balanced battery packs. In this case, the third to-be-balanced battery packs discharge.

When there are two battery clusters at the second end of the power conversion circuit, battery packs in a battery cluster with a higher SOC value is sorted in descending order of SOC values, and battery packs whose SOC values exceed an SOC value of the other battery cluster are third to-be-balanced battery packs.

Specifically, the first controller determines third deviations Zi between SOC values of the third to-be-balanced battery packs and the second average value A2, and determines, based on the third deviations Zi, balancing currents of the direct current/direct current conversion circuits connected to the third to-be-balanced battery packs. Magnitude of the balancing currents of the direct current/direct current conversion circuits connected to the third to-be-balanced battery packs is positively correlated with magnitude of the corresponding third deviations Zi. In other words, a larger third deviation Zi indicates a higher balancing current of the direct current/direct current conversion circuit.

In conclusion, in the solution provided in this application, the balancing bus is added to the second end of the power conversion circuit, and each battery pack is connected to the balancing bus by using one direct current/direct current conversion circuit. The controller controls a working status of each direct current/direct current conversion circuit to implement electric energy balancing between battery packs. In addition, the energy storage system can further implement high-power balancing between a battery pack and a battery cluster and high-power balancing between battery clusters, and a balancing current greatly increases and can reach a 100-ampere level, so that an electric energy balancing capability is improved. Therefore, electric energy balancing can be quickly implemented, and impact on the energy storage system that is caused by a Cannikin law of batteries can be effectively alleviated.

In addition, when a bus of a battery cluster is faulty, a battery pack in the battery cluster may continue to exchange energy with the power conversion circuit by using a direct current/direct current conversion circuit, the balancing bus, and the controllable switch K, so that reliability of the energy storage system is further improved.

Based on the energy storage system provided in the foregoing embodiments, an embodiment of this application further provides a balancing control method for an energy storage system. In the method, each direct current/direct current conversion circuit in the energy storage system is controlled, so that electric energy of battery packs in a battery cluster is balanced. The following provides detailed descriptions with reference to the accompanying drawings.

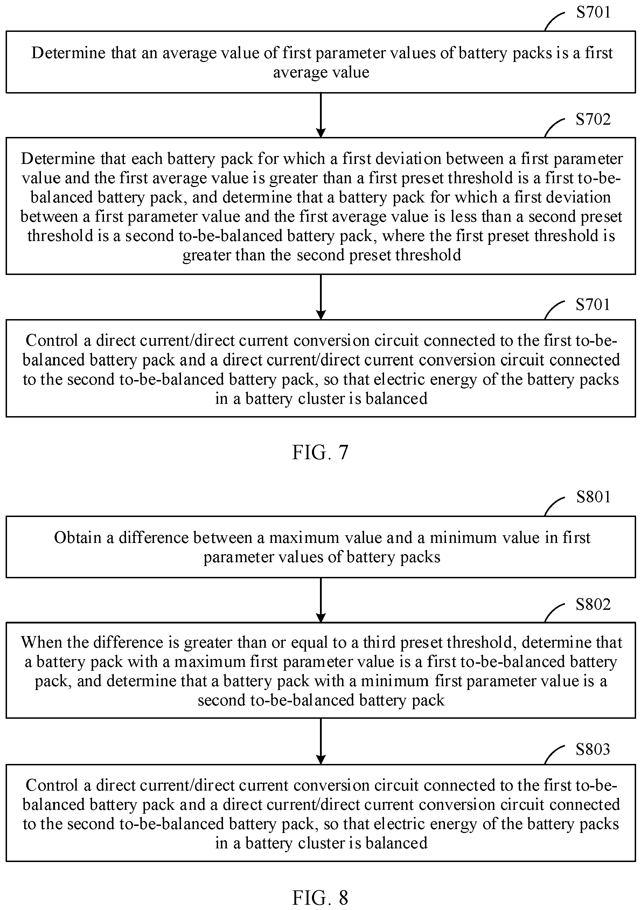

FIG. 7 is a flowchart of a balancing control method for an energy storage system according to an embodiment of this application.

The method shown in the figure includes the following steps.

S701: Determine that an average value of first parameter values of battery packs is a first average value.

The first parameter value may be an SOC value or a voltage value. In the following descriptions of this application, an example in which the first parameter value is an SOC value is used for description.

A battery cluster includes n battery packs, and $SOC_i$ of the battery packs is obtained, where i=1, 2, ..., and n.

It is determined that an average value of the SOC values of the battery packs in the battery cluster is a first average value A1.

S702: Determine that each battery pack for which a first deviation between a first parameter value and the first average value is greater than a first preset threshold is a first to-be-balanced battery pack, and determine that a battery pack for which a first deviation between a first parameter value and the first average value is less than a second preset threshold is a second to-be-balanced battery pack, where the first preset threshold is greater than the second preset threshold.

First deviations Xi between the SOC values of the battery packs and the first average value A1 are determined.

It is determined whether there is currently a battery pack whose corresponding Xi falls beyond a preset threshold range [a, b], where b is the first preset threshold, a is the second preset threshold, and the first preset threshold is greater than the second preset threshold. When all Xi falls within the threshold range [a, b], no electric energy balancing is performed; otherwise, balancing control is enabled.

S703: Control a direct current/direct current conversion circuit connected to the first to-be-balanced battery pack and a direct current/direct current conversion circuit connected to the second to-be-balanced battery pack, so that electric energy of the battery packs in the battery cluster is balanced.

In a possible implementation, during balancing control, the direct current/direct current conversion circuit connected to the first to-be-balanced battery pack may be controlled to be a voltage source for providing a reference voltage of a balancing bus, the direct current/direct current conversion circuit connected to the second to-be-balanced battery pack may be controlled to be a current source, and then magnitude of a balancing current may be controlled by controlling the direct current/direct current conversion circuit, so that a current of the first to-be-balanced battery pack flows to the second to-be-balanced battery pack through the balancing bus.

In another possible implementation, during balancing control, alternatively, the direct current/direct current conversion circuit connected to the first to-be-balanced battery pack may be controlled to be a current source, and the direct current/direct current conversion circuit connected to the second to-be-balanced battery pack may be controlled to be a voltage source.

There may be one or more first to-be-balanced battery packs, and there may be one or more second to-be-balanced battery packs. In other words, one-to-one balancing, one-to-many balancing, many-to-one balancing, and many-to-many balancing of battery packs may be implemented.

The following describes another method for controlling an energy storage system to implement electric energy balancing between battery packs.

FIG. 8 is a flowchart of another balancing control method for an energy storage system according to an embodiment of this application.

The method shown in the figure includes the following steps.

S801: Obtain a difference between a maximum value and a minimum value in first parameter values of battery packs.

A battery cluster includes n battery packs, and $SOC_i$ of the battery packs is obtained, where i=1, 2, ..., and n.

A difference d between a maximum value and a minimum value in the SOCs of the battery packs is obtained.

S802: When the difference is greater than or equal to a third preset threshold, determine that a battery pack with a maximum first parameter value is a first to-be-balanced battery pack, and determine that a battery pack with a minimum first parameter value is a second to-be-balanced battery pack.

S803: Control a direct current/direct current conversion circuit connected to the first to-be-balanced battery pack and a direct current/direct current conversion circuit connected to the second to-be-balanced battery pack, so that electric energy of the battery packs in the battery cluster is balanced.

In the method provided in this embodiment of this application, a working status of each direct current/direct current conversion circuit is controlled, so that electric energy of a battery pack is transferred to a balancing bus by using the direct current/direct current conversion circuit, and is then transferred from the balancing bus to another battery pack by using another direct current/direct current conversion circuit. In this way, electric energy of the battery packs is balanced. Because battery pack-level electric energy balancing is performed, in comparison with a solution of performing passive balancing on batteries, a balancing current greatly increases and can reach a 100-ampere level, so that an electric energy balancing capability is improved. In addition, a controller simultaneously controls a plurality of direct current/direct current conversion circuits, so that electric energy balancing between a plurality of battery packs can be implemented, thereby further improving the electric energy balancing capability and effectively alleviating impact on an energy storage system that is caused by a Cannikin law of batteries.

The following describes a method for controlling an energy storage system to implement high-power balancing between a battery pack and a battery cluster.

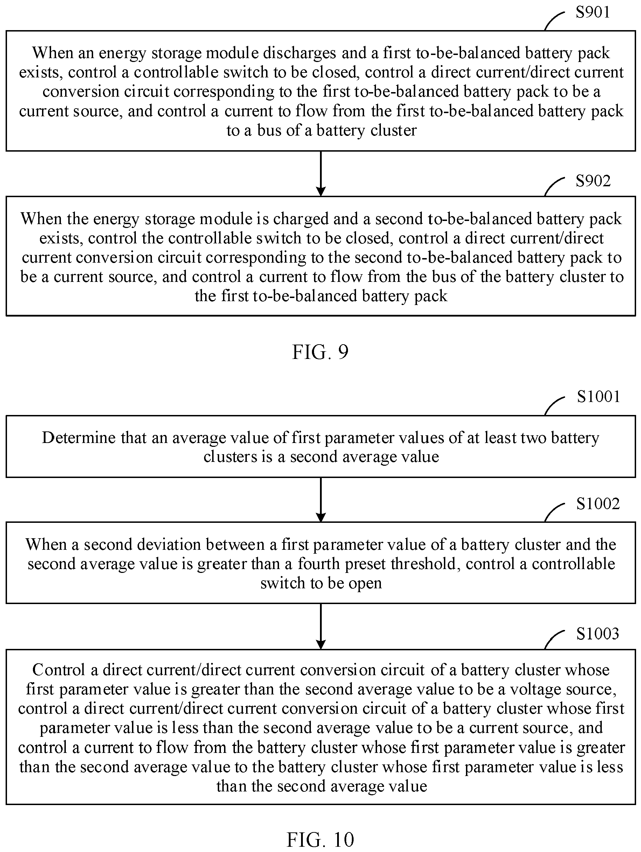

FIG. 9 is a flowchart of still another balancing control method for an energy storage system according to an embodiment of this application.

The method shown in the figure may be implemented based on the method shown in FIG. 7 or FIG. 8, and includes the following steps:

S901: When an energy storage module discharges and a first to-be-balanced battery pack exists, control a controllable switch to be closed, control a direct current/direct current conversion circuit corresponding to the first to-be-balanced battery pack to be a current source, and control a current to flow from the first to-be-balanced battery pack to a bus of a battery cluster.

S902: When the energy storage module is charged and a second to-be-balanced battery pack exists, control the controllable switch to be closed, control a direct current/direct current conversion circuit corresponding to the second to-be-balanced battery pack to be a current source, and control a current to flow from the bus of the battery cluster to the first to-be-balanced battery pack.

In some embodiments, when the energy storage module discharges and at least two first to-be-balanced battery packs exist, the method further includes the following step:

determining, based on magnitude of first deviations corresponding to the first to-be-balanced battery packs, magnitude of balancing currents of direct current/direct current conversion circuits connected to the first to-be-balanced battery packs.

When the energy storage module is charged and at least two second to-be-balanced battery packs exist, the method further includes the following step:

determining, based on magnitude of first deviations corresponding to the second to-be-balanced battery packs, magnitude of balancing currents of direct current/direct current conversion circuits connected to the second to-be-balanced battery packs, where the magnitude of the balancing currents is positively correlated with the magnitude of the first deviations.

The following describes a method for controlling an energy storage system to implement high-power balancing between battery clusters.

FIG. 10 is a flowchart of yet another balancing control method for an energy storage system according to an embodiment of this application.

In this case, a second end of each power conversion circuit is connected to at least two battery clusters, buses of the at least two battery clusters are connected in parallel and are then connected to a balancing bus by using a controllable switch, and the method shown in the figure includes the following steps.

S1001: Determine that an average value of first parameter values of the at least two battery clusters is a second average value.

The first parameter value is a state of charge SOC value or a voltage value.

S1002: When a second deviation between a first parameter value of a battery cluster and the second average value is greater than a fourth preset threshold, control the controllable switch to be open.

S1003: Control a direct current/direct current conversion circuit of a battery cluster whose first parameter value is greater than the second average value to be a voltage source, control a direct current/direct current conversion circuit of a battery cluster whose first parameter value is less than the second average value to be a current source, and control a current to flow from the battery cluster whose first parameter value is greater than the second average value to the battery cluster whose first parameter value is less than the second average value.

The following describes another method for controlling an energy storage system to implement high-power balancing between battery clusters.

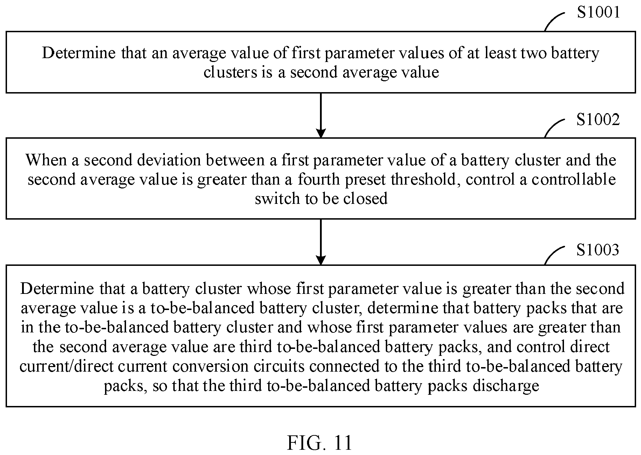

FIG. 11 is a flowchart of still yet another balancing control method for an energy storage system according to an embodiment of this application.

In this case, a first parameter value is a state of charge SOC value, and the method includes the following steps:

S1101: Determine that an average value of first parameter values of at least two battery clusters is a second average value.

S1102: When a second deviation between a first parameter value of a battery cluster and the second average value is greater than a fourth preset threshold, control a controllable switch to be closed.

S1103: Determine that a battery cluster whose first parameter value is greater than the second average value is a to-be-balanced battery cluster, determine that battery packs that are in the to-be-balanced battery cluster and whose first parameter values are greater than the second average value are third to-be-balanced battery packs, and control direct current/direct current conversion circuits connected to the third to-be-balanced battery packs, so that the third to-be-balanced battery packs discharge.

When the direct current/direct current conversion circuits connected to the third to-be-balanced battery packs are controlled, S1103 specifically includes the following steps:

obtaining third deviations between first parameter values of the third to-be-balanced battery packs and the second average value; and

determining, based on the third deviations, balancing currents of the direct current/direct current conversion circuits connected to the third to-be-balanced battery packs, where magnitude of the balancing currents of the direct current/direct current conversion circuits connected to the third to-be-balanced battery packs is positively correlated with magnitude of the corresponding third deviations.

In the foregoing control method, high-power balancing between a battery pack and a battery cluster and high-power balancing between battery clusters are implemented, and a balancing current greatly increases, so that an electric energy balancing capability is improved. Therefore, electric energy balancing can be quickly implemented, and impact on the energy storage system that is caused by a Cannikin law of batteries can be effectively alleviated.

Based on the energy storage system provided in the foregoing embodiments, an embodiment of this application further provides a photovoltaic power system. The following describes the photovoltaic power system in detail with reference to the accompanying drawings.

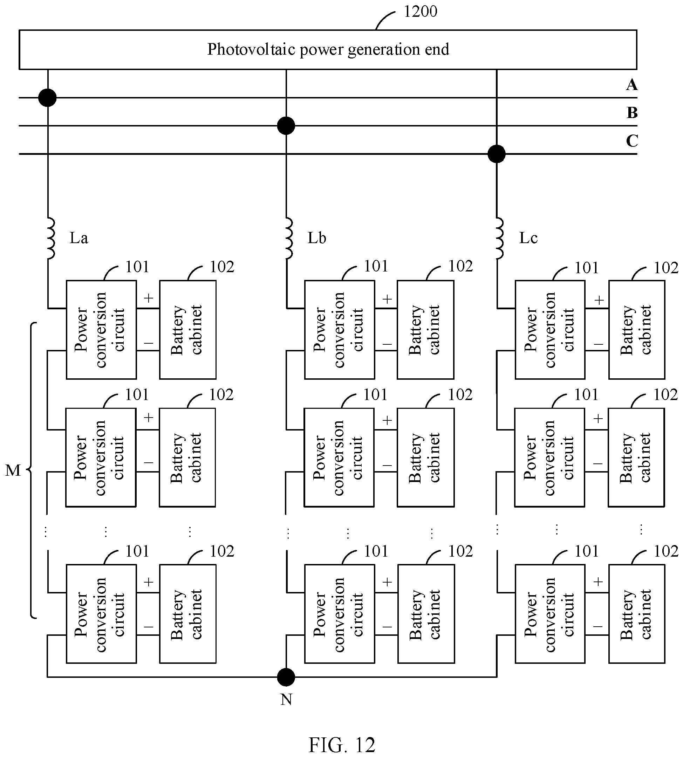

FIG. 12 is a schematic diagram of a photovoltaic power system according to an embodiment of this application.

The photovoltaic power system shown in the figure includes an energy storage system and a photovoltaic power generation end 1200.

The energy storage system includes three power conversion branches, and the energy storage system is configured to connect to a three-phase alternating current power network. For a specific implementation of the energy storage system, refer to related descriptions in the foregoing embodiments. Details are not described herein again.

The photovoltaic power generation end 1200 specifically includes a photovoltaic module and a three-phase photovoltaic inverter. The following describes a specific implementation of the photovoltaic power generation end.

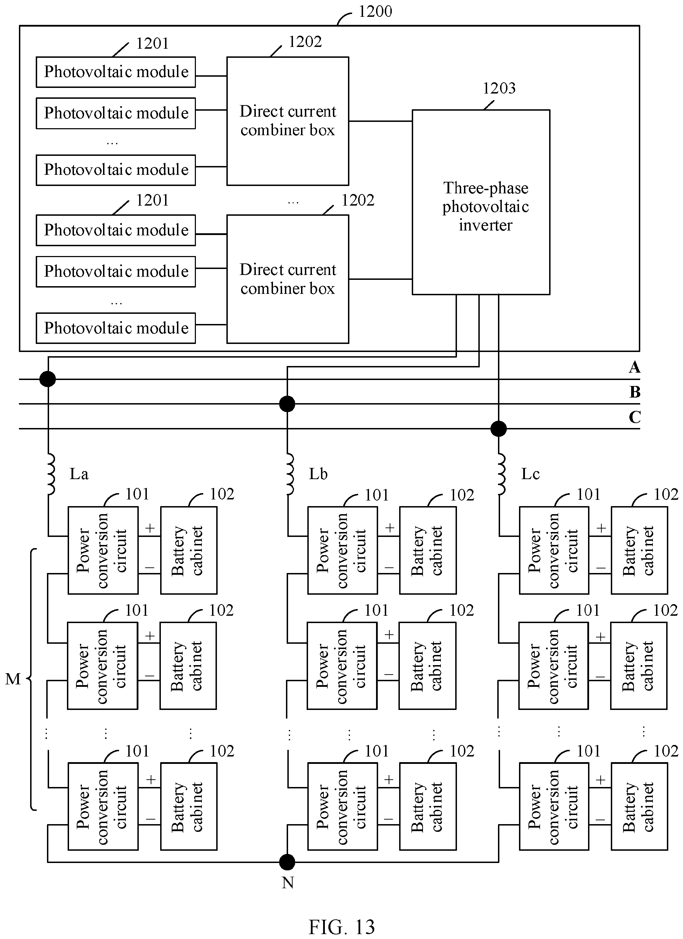

FIG. 13 is a schematic diagram of another photovoltaic power system according to an embodiment of this application.

A photovoltaic power generation end shown in the figure includes a photovoltaic module 1201, a direct current combiner box 1202, and a three-phase photovoltaic inverter 1203.

The photovoltaic module 1201 is configured to generate a direct current by using optical energy. An input end of the direct current combiner box 1202 is usually connected to a plurality of photovoltaic modules 1201, and an output end of the direct current combiner box 1202 is connected to the three-phase photovoltaic inverter 1203.

An output end of the three-phase photovoltaic inverter 1203 is connected to a three-phase alternating current bus. The three-phase alternating current bus is further connected to an energy storage system and an alternating current power network. The three-phase photovoltaic inverter 1203 is configured to: convert a direct current into a three-phase alternating current, and transmit the three-phase alternating current to the power network by using the three-phase alternating current bus or charge the energy storage system.

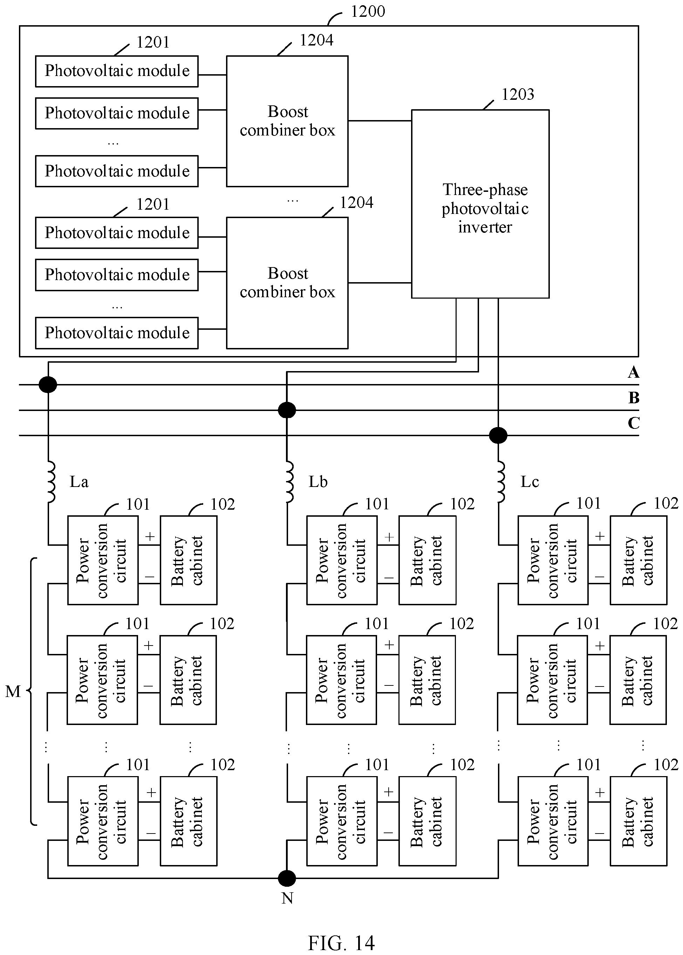

FIG. 14 is a schematic diagram of still another photovoltaic power system according to an embodiment of this application.

The photovoltaic power system shown in FIG. 14 differs from that in FIG. 13 in that a photovoltaic module 1201 first outputs a direct current to a boost combiner box 1204. The boost combiner box 1204 has a maximum power point tracking (Maximum power point tracking, MPPT) function, and is a direct current boost converter.

In actual application, there may be one or more three-phase photovoltaic inverters 1203 in the scenarios in FIG. 13 and FIG. 14. This is not specifically limited in embodiments of this application.

Because a photovoltaic power generation end 1200 is characterized by fluctuation and uncertainty, a power yield of the photovoltaic power generation end 1200 fluctuates. When an alternating current output by the photovoltaic power generation end 1200 is greater than an electrical requirement of an alternating current power network, excess electric energy is converted into a direct current by using a power conversion circuit 101 for charging a battery cluster. When an alternating current output by the photovoltaic power generation end 1200 is less than an electrical requirement of an alternating current power network, a power conversion circuit 101 converts, into an alternating current, a direct current output by a battery cluster, and then outputs the alternating current to the alternating current power network, so that the alternating current power network tends to be stable.

In an energy storage system of the photovoltaic power system, a balancing bus is added to a second end of the power conversion circuit, and each battery pack is connected to the balancing bus by using one direct current/direct current conversion circuit. A controller controls a working status of each direct current/direct current conversion circuit, so that electric energy of a battery pack is transferred to the balancing bus by using the direct current/direct current conversion circuit, and is then transferred from the balancing bus to another battery pack by using another direct current/direct current conversion circuit. In this way, electric energy of battery packs is balanced. Because battery pack-level electric energy balancing is performed, in comparison with a solution of performing passive balancing on batteries, a balancing current greatly increases and can reach a 100-ampere level, so that an electric energy balancing capability is improved. In addition, the controller simultaneously controls a plurality of direct current/direct current conversion circuits, so that electric energy balancing between a plurality of battery packs can be implemented, thereby further improving the electric energy balancing capability.

In conclusion, in the energy storage system provided in this embodiment of this application, battery pack-level electric energy balancing can be performed, so that an electric energy balancing capability is improved, and impact on the energy storage system that is caused by a Cannikin law of batteries is effectively alleviated.

It should be understood that, in this application, "at least one" means one or more, and "a plurality of" means two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, "a and b", "a and c", "b and c", or "a, b and c", where a, b, and c each may be singular or plural.

**Claims**

1. An energy storage system, comprising a controller and three power conversion branches (A, B, C), wherein

each power conversion branch (A, B, C) comprises one power conversion circuit (101), and a first end of the power conversion circuit (101) is connected to an alternating current bus; or
each power conversion branch (A, B, C) comprises at least two power conversion circuits (101) connected in series, and first ends of the at least two power conversion circuits (101) are connected in series and are then connected to an alternating current bus;
a second end of each power conversion circuit (101) is connected to at least one battery cluster (102);
each battery cluster (102) comprises at least two energy storage modules connected in series, each energy storage module comprises one direct current/direct current conversion circuit (1021) and one battery pack (1022), and each battery pack (1022) comprises at least two batteries;
an output end of each battery pack (1022) is connected to an input end of a corresponding direct current/direct current conversion circuit (1021), and an output end of each direct current/direct current conversion circuit (1021) is connected in parallel to a balancing bus;
the power conversion circuit (101) is configured to: convert a direct current provided by the battery cluster (102) into an alternating current and then transmit the alternating current to an alternating current power network, or convert an alternating current obtained from an alternating current power network into a direct current and then charge the battery cluster (102); and
the controller is configured to control each direct current/direct current conversion circuit (1021), so that electric energy of battery packs (1022) in the battery cluster (102) is balanced;
wherein

a) each battery pack (1022) for which a first deviation between the first parameter value and the first average value is greater than a first preset threshold is a first to-be-balanced battery pack (1022), and a battery pack (1022) for which a first deviation between the first parameter value and the first average value is less than a second preset threshold is a second to-be-balanced battery pack (1022); and
the controller is specifically configured to: control a direct current/direct current conversion circuit (1021) connected to the first to-be-balanced battery pack (1022) and a direct current/direct current conversion circuit (1021) connected to the second to-be-balanced battery pack (1022); and the first preset threshold is greater than the second preset threshold;
or
b) the controller is specifically configured to: obtain a difference between a maximum value and a minimum value in first parameter values of battery packs (1022); when the difference is greater than or equal to a third preset threshold, determine that a battery pack (1022) with a maximum first parameter value is a first to-be-balanced battery pack (1022); determine that a battery pack (1022) with a minimum first parameter value is a second to-be-balanced battery pack (1022); and control a direct current/direct current conversion circuit (1021) connected to the first to-be-balanced battery pack (1022) and a direct current/direct current conversion circuit (1021) connected to the second to-be-balanced battery pack;

wherein the energy storage system further comprises a controllable switch (K), wherein
the balancing bus is connected to a bus of the battery cluster (102) by using the controllable switch (K);
the controller is further configured to control the controllable switch (K) based on the first parameter values of the battery packs (1022); and
wherein when the energy storage module discharges and a first to-be-balanced battery pack (1022) exists, the controller controls the controllable switch (K) to be closed, controls a direct current/direct current conversion circuit (1021) corresponding to the first to-be-balanced battery pack (1022) to be a current source, and controls a current to flow from the first to-be-balanced battery pack (1022) to the bus of the battery cluster (102) (102); and when the energy storage module is charged and a second to-be-balanced battery pack (1022) exists, the controller controls the controllable switch (K) to be closed, controls a direct current/direct current conversion circuit (1021) corresponding to the second to-be-balanced battery pack (1022) to be a current source, and controls a current to flow from the bus of the battery cluster (102) to the first to-be-balanced battery pack.

2. The energy storage system according to claim 1, wherein when the energy storage module discharges and at least two first to-be-balanced battery packs (1022) exist, the controller is further configured to determine, based on magnitude of first deviations corresponding to the first to-be-balanced battery packs (1022), magnitude of balancing currents of direct current/direct current conversion circuits connected to the first to-be-balanced battery packs (1022); when the energy storage module is charged and at least two second to-be-balanced battery packs (1022) exist, the controller is further configured to determine, based on magnitude of first deviations corresponding to the second to-be-balanced battery packs (1022), magnitude of balancing currents of direct current/direct current conversion circuits connected to the second to-be-balanced battery packs (1022); and the magnitude of the balancing currents is positively correlated with the magnitude of the first deviations

3. The energy storage system according to any one of claims 1 and 2, wherein the second end of each power conversion circuit (101) is connected to at least two battery clusters; and
buses of the at least two battery clusters are connected in parallel and are then connected to the balancing bus by using the controllable switch (K).

4. The energy storage system according to claim 3, wherein the controller is further configured to: determine that an average value of first parameter values of the at least two battery clusters is a second average value; and when a second deviation between the first parameter value of the battery cluster (102) and the second average value is greater than a fourth preset threshold, control the controllable switch (K) to be open, control a direct current/direct current conversion circuit (1021) of the battery cluster (102) whose first parameter value is greater than the second average value to be a voltage source, control a direct current/direct current conversion circuit (1021) of the battery cluster (102) whose first parameter value is less than the second average value to be a current source, and control a current to flow from the battery cluster (102) whose first parameter value is greater than the second average value to the battery cluster (102) whose first parameter value is less than the second average value

5. The energy storage system according to any one of claims 1 to 4, wherein the first parameter value is a state of charge SOC value or a voltage value, wherein the first parameter value is a state of charge SOC value, and the controller is further configured to: determine that an average value of first parameter values of the at least two battery clusters is a second average value; and when a second deviation between a first parameter value of a battery cluster (102) and the second average value is greater than a fourth preset threshold, control the controllable switch (K) to be closed, determine that a battery cluster (102) whose first parameter value is greater than the second average value is a to-be-balanced battery cluster, determine that battery packs (1022) that are in the to-be-balanced battery cluster (102) and whose first parameter values are greater than the second average value are third to-be-balanced battery packs (1022), and control direct current/direct current conversion circuits connected to the third to-be-balanced battery packs (1022), so that the third to-be-balanced battery packs (1022) discharge.

6. The energy storage system according to claim 5, wherein the controller obtains third deviations between first parameter values of the third to-be-balanced battery packs (1022) and the second average value; and determines, based on the third deviations, balancing currents of the direct current/direct current conversion circuits connected to the third to-be-balanced battery packs (1022), wherein magnitude of the balancing currents of the direct current/direct current conversion circuits connected to the third to-be-balanced battery packs (1022) is positively correlated with magnitude of the corresponding third deviations

7. The energy storage system according to any one of claims 1 to 6, wherein the controller comprises a first control unit and a second control unit;

a quantity of second control units is the same as a quantity of battery packs (1022) in the battery cluster (102) (102);
each second control unit is configured to: obtain a first parameter value of one battery pack (1022); send the first parameter value to the first control unit; and control one corresponding direct current/direct current conversion circuit (1021) according to a control instruction sent by the first control unit; and

the first control unit is configured to: determine the first to-be-balanced battery pack (1022) and the second to-be-balanced battery pack (1022) based on obtained first parameter values; and send control instructions to the second control units

**8.** The energy storage system according to claim 1, wherein the energy storage system further comprises a three-phase alternating current bus, a first end of each power conversion branch (A, B, C) is connected to a one-phase alternating current bus, and second ends of the three power conversion branches (A, B, C) are connected to each other; or

the energy storage system further comprises a three-phase alternating current bus, and the three power conversion branches (A, B, C) are separately connected between alternating current buses of every two phases; or a voltage of the balancing bus is less than or equal to an output voltage of the battery cluster, and is greater than a voltage output by the battery pack (1022) to the direct current/direct current conversion circuit.

**9.** A balancing control method for an energy storage system, wherein the energy storage system comprises three power conversion branches (A, B, C), each power conversion branch (A, B, C) comprises one power conversion circuit (101), and a first end of the power conversion circuit (101) is connected to an alternating current bus; or each power conversion branch (A, B, C) comprises at least two power conversion circuits (101) connected in series, and first ends of the at least two power conversion circuits (101) are connected in series and are then connected to an alternating current bus; a second end of each power conversion circuit (101) is connected to at least one battery cluster (102) (102); each battery cluster (102) comprises at least two energy storage modules connected in series, each energy storage module comprises one direct current/direct current conversion circuit (1021) and one battery pack (1022), and each battery pack (1022) comprises at least two batteries; an output end of each battery pack (1022) is connected to an input end of a corresponding direct current/direct current conversion circuit (1021), and an output end of each direct current/direct current conversion circuit (1021) is connected in parallel to a balancing bus; and the method comprises:

controlling each direct current/direct current conversion circuit (1021), so that electric energy of battery packs (1022) in the battery cluster (102) is balanced;
wherein each battery pack (1022) for which a first deviation between the first parameter value and the first average value is greater than a first preset threshold is a first to-be-balanced battery pack (1022), and a battery pack (1022) for which a first deviation between the first parameter value and the first average value is less than a second preset threshold is a second to-be-balanced battery pack (1022), wherein the first preset threshold is greater than the second preset threshold; and
wherein the method comprises controlling a direct current/direct current conversion circuit (1021) connected to the first to-be-balanced battery pack (1022) and a direct current/direct current conversion circuit (1021) connected to the second to-be-balanced battery pack (1022), so that the electric energy of the battery packs (1022) in the battery cluster (102) is balanced;
and wherein the energy storage system further comprises a controllable switch (K), a balancing bus is connected to a bus of the battery cluster (102) by using the controllable switch (K), and the method further comprises:

when an energy storage module discharges and a first to-be-balanced battery pack (1022) exists, controlling the controllable switch (K) to be closed, controlling a direct current/direct current conversion circuit (1021) corresponding to the first to-be-balanced battery pack (1022) to be a current source, and controlling a current to flow from the first to-be-balanced battery pack (1022) to the bus of the battery cluster (102) (102); and
when the energy storage module is charged and a second to-be-balanced battery pack (1022) exists, controlling the controllable switch (K) to be closed, controlling a direct current/direct current conversion circuit (1021) corresponding to the second to-be-balanced battery pack (1022) to be a current source, and controlling a current to flow from the bus of the battery cluster (102) to the first to-be-balanced battery pack.

**Patentansprüche**

**1.** Energiespeichersystem, das eine Steuereinheit und drei Leistungswandlerzweige (A, B, C), umfasst, wobei:

jeder Leistungswandlerzweig (A, B, C) eine Leistungswandlerschaltung (101) umfasst, und wobei ein erstes Ende der Leistungswandlerschaltung (101) mit einem Wechselstrombus verbunden ist; oder

jeder Leistungswandlerzweig (A, B, C) mindestens zwei in Reihe geschaltete Leistungswandlerschaltungen (101) umfasst, und wobei erste Enden der mindestens zwei Leistungswandlerschaltungen (101) in Reihe geschaltet sind und danach mit einem Wechselstrombus verbunden sind;

ein zweites Ende von jeder Leistungswandlerschaltung (101) mit mindestens einer Batterieansammlung (102) verbunden ist;

jede Batterieansammlung (102) mindestens zwei Energiespeichermodule umfasst, die in Reihe geschaltet sind, wobei jedes Energiespeichermodul eine Gleichstrom-Gleichstrom-Wandlerschaltung (1021) und einen Batteriepack (1022) umfasst, und wobei jeder Batteriepack (1022) mindestens zwei Batterien umfasst;

ein Ausgangsende von jedem Batteriepack (1022) mit einem Eingangsende einer entsprechenden Gleichstrom-Gleichstrom-Wandlerschaltung (1021) verbunden ist, und ein Ausgangsende von jeder Gleichstrom-Gleichstrom-Wandlerschaltung (1021) mit einem Ausgleichsbus parallel geschaltet ist;

die Leistungswandlerschaltung (101) konfiguriert ist zum: Umwandeln eines Gleichstroms, der von der Batterieansammlung (102) bereitgestellt wird, in einen Wechselstrom und danach Übertragen des Wechselstroms an ein Wechselstromnetz;

oder Umwandeln eines Wechselstroms, der von einem Wechselstromnetz erhalten wird, in einen Gleichstrom und danach Aufladen der Batterieansammlung (102); und

die Steuereinheit konfiguriert ist zum Steuern von jeder Gleichstrom-Gleichstrom-Wandlerschaltung (1021), sodass eine elektrische Energie der Batteriepacks (1022) in der Batterieansammlung (102) ausgeglichen ist; wobei:

a) jeder Batteriepack (1022), für den eine erste Abweichung zwischen dem ersten Parameterwert und dem ersten Durchschnittswert größer als ein erster voreingestellter Schwellenwert ist, ein erster auszugleichender Batteriepack (1022) ist, und ein Batteriepack (1022), für den eine erste Abweichung zwischen dem ersten Parameterwert und dem ersten Durchschnittswert geringer als ein zweiter voreingestellter Schwellenwert ist, ein zweiter auszugleichender Batteriepack (1022) ist; und

die Steuereinheit insbesondere konfiguriert ist zum: Steuern einer Gleichstrom-Gleichstrom-Wandlerschaltung (1021), die mit dem ersten auszugleichenden Batteriepack (1022) verbunden ist, und einer Gleichstrom-Gleichstrom-Wandlerschaltung (1021), die mit dem zweiten auszugleichenden Batteriepack (1022) verbunden ist; und wobei der erste voreingestellte Schwellenwert größer als der zweite voreingestellte Schwellenwert ist;

oder

b) die Steuereinheit insbesondere konfiguriert ist zum: Erhalten einer Differenz zwischen einem Maximalwert und einem Minimalwert bei den ersten Parameterwerten der Batteriepacks (1022); wenn die Differenz größer als ein, oder gleich einem dritten voreingestellten Schwellenwert ist, Ermitteln, dass ein Batteriepack (1022) mit einem maximalen ersten Parameterwert ein erster auszugleichender Batteriepack (1022) ist;

Ermitteln, dass ein Batteriepack (1022) mit einem minimalen ersten Parameterwert ein zweiter auszugleichender Batteriepack (1022) ist; und Steuern einer Gleichstrom-Gleichstrom-Wandlerschaltung (1021), die mit dem ersten auszugleichenden Batteriepack (1022) verbunden ist, und einer Gleichstrom-Gleichstrom-Wandlerschaltung (1021), die mit dem zweiten auszugleichenden Batteriepack verbunden ist;

wobei das Energiespeichersystem außerdem einen steuerbaren Schalter (K) umfasst, wobei:

der Ausgleichsbus mit einem Bus der Batterieansammlung (102) verbunden ist, indem der steuerbare Schalter (K) verwendet wird;

die Steuereinheit außerdem konfiguriert ist zum Steuern des steuerbaren Schalters (K) aufgrund der ersten Parameterwerte der Batteriepacks (1022); und

wobei, wenn das Energiespeichermodul entladen wird und ein erster auszugleichender Batteriepack (1022) vorhanden ist, die Steuereinheit den steuerbaren Schalter (K) steuert, damit er geschlossen ist, eine Gleichstrom-Gleichstrom-Wandlerschaltung (1021) steuert, die dem ersten auszugleichenden Batteriepack (1022) entspricht, damit sie eine Stromquelle ist, und einen Strom steuert, damit er von dem ersten auszugleichenden Batteriepack (1022) zu dem Bus der Batterieansammlung (102) fließt; und wobei, wenn das Energiespeichermodul aufgeladen wird und ein zweiter auszugleichender Batteriepack (1022) vorhanden ist, die Steuereinheit den steuerbaren Schalter (K) steuert, damit er geschlossen ist, eine Gleichstrom-Gleichstrom-Wandlerschaltung (1021) steuert, die dem zweiten auszugleichenden Batteriepack (1022) entspricht, damit sie eine Stromquelle ist, und einen Strom steuert, damit er von dem Bus der Batterieansammlung (102) zu dem ersten auszugleichenden Batteriepack fließt.

**2.** Energiespeichersystem nach Anspruch 1, wobei, wenn das Energiespeichermodul entladen wird und mindestens zwei erste auszugleichende Batteriepacks (1022) vorhanden sind, die Steuereinheit außerdem konfiguriert ist zum Ermitteln, aufgrund einer Größe der ersten Abweichungen, die den ersten auszugleichenden Batteriepacks (1022) entsprechen, einer Stärke von Ausgleichsströmen der Gleichstrom-Gleichstrom-Wandlerschaltungen, die mit den ersten auszugleichenden Batteriepacks (1022) verbunden sind; wobei, wenn das Energiespeichermodul aufgeladen wird und mindestens zwei zweite auszugleichende Batteriepacks (1022) vorhanden sind, die Steuereinheit außerdem konfiguriert ist zum Ermitteln, aufgrund einer Größe der ersten Abweichungen, die den zweiten auszugleichenden Batteriepacks (1022) entsprechen, einer Stärke von Ausgleichsströmen der Gleichstrom-Gleichstrom-Wandlerschaltungen, die mit den zweiten auszugleichenden Batteriepacks (1022) verbunden sind; und wobei die Stärke der Ausgleichsströme positiv mit der Größe der ersten Abweichungen korreliert ist.

**3.** Energiespeichersystem nach einem der Ansprüche 1 und 2, wobei das zweite Ende von jeder Leistungswandlerschaltung (101) mit mindestens zwei Batterieansammlungen verbunden ist; und
wobei Busse der mindestens zwei Batterieansammlungen parallel geschaltet sind und danach mit dem Ausgleichsbus verbunden sind, indem der steuerbare Schalter (K) verwendet wird.

**4.** Energiespeichersystem nach Anspruch 3, wobei die Steuereinheit außerdem konfiguriert ist zum: Ermitteln, dass ein Durchschnittswert der ersten Parameterwerte der mindestens zwei Batterieansammlungen ein zweiter Durchschnittswert ist; und wenn eine zweite Abweichung zwischen dem ersten Parameterwert der Batterieansammlung (102) und dem zweiten Durchschnittswert größer als ein vierter voreingestellter Schwellenwert ist, Steuern des steuerbaren Schalters (K), damit er geöffnet ist, Steuern einer Gleichstrom-Gleichstrom-Wandlerschaltung (1021) der Batterieansammlung (102), deren erster Parameterwert größer als der zweite Durchschnittswert ist, damit sie eine Spannungsquelle ist, Steuern einer Gleichstrom-Gleichstrom-Wandlerschaltung (1021) der Batterieansammlung (102), deren erster Parameterwert geringer als der zweite Durchschnittswert ist, damit sie eine Stromquelle ist, und Steuern eines Stroms, damit er von der Batterieansammlung (102), deren erster Parameterwert größer als der zweite Durchschnittswert ist, zu der Batterieansammlung (102) fließt, deren erster Parameterwert geringer als der zweite Durchschnittswert ist.

**5.** Energiespeichersystem nach einem der Ansprüche 1 bis 4, wobei der erste Parameterwert ein Ladezustandswert (State Of Charge value, SOC-Wert) oder ein Spannungswert ist, wobei der erste Parameterwert ein Ladezustandswert (State Of Charge value, SOC-Wert) ist und wobei die Steuereinheit außerdem konfiguriert ist zum: Ermitteln, dass ein Durchschnittswert der ersten Parameterwerte der mindestens zwei Batterieansammlungen ein zweiter Durchschnittswert ist; und wenn eine zweite Abweichung zwischen einem ersten Parameterwert einer Batterieansammlung (102) und dem zweiten Durchschnittswert größer als ein vierter voreingestellter Schwellenwert ist, Steuern des steuerbaren Schalters (K), damit er geschlossen ist, Ermitteln, dass eine Batterieansammlung (102), deren erster Parameterwert größer als der zweite Durchschnittswert ist, eine auszugleichende Batterieansammlung ist, Ermitteln, dass Batteriepacks (1022), die sich in der auszugleichenden Batterieansammlung (102) befinden und deren erste Parameterwerte größer als der zweite Durchschnittswert sind, dritte auszugleichende Batteriepacks (1022) sind, und Steuern von Gleichstrom-Gleichstrom-Wandlerschaltungen, die mit den dritten auszugleichenden Batteriepacks (1022) verbunden sind, sodass die dritten auszugleichenden Batteriepacks (1022) entladen werden.

**6.** Energiespeichersystem nach Anspruch 5, wobei die Steuereinheit dritte Abweichungen zwischen den ersten Parameterwerten der dritten auszugleichenden Batteriepacks (1022) und dem zweiten Durchschnittswert erhält, und aufgrund der dritten Abweichungen Ausgleichsströme der Gleichstrom-Gleichstrom-Wandlerschaltungen ermittelt, die mit den dritten auszugleichenden Batteriepacks (1022) verbunden sind, wobei eine Stärke der Ausgleichsströme der Gleichstrom-Gleichstrom-Wandlerschaltungen, die mit den dritten auszugleichenden Batteriepacks (1022) verbunden sind, mit einer Größe der entsprechenden dritten Abweichungen positiv korreliert ist.

**7.** Energiespeichersystem nach einem der Ansprüche 1 bis 6, wobei die Steuereinheit eine erste Steuereinrichtung und eine zweite Steuereinrichtung umfasst;

wobei eine Anzahl von Steuereinrichtungen die gleiche ist wie eine Anzahl von Batteriepacks (1022) in der Batterieansammlung (102);
wobei jede der zweiten Steuereinrichtungen konfiguriert ist zum: Erhalten eines ersten Parameterwerts von einem Batteriepack (1022); Senden des ersten Parameterwerts zu der ersten Steuereinrichtung; und Steuern einer entsprechenden Gleichstrom-Gleichstrom-Wandlerschaltung (1021) gemäß einer Steueranweisung, die von der ersten Steuereinrichtung gesendet wird; und
wobei die erste Steuereinrichtung konfiguriert ist zum: Ermitteln des ersten auszugleichenden Batteriepacks (1022) und des zweiten auszugleichenden Batteriepacks (1022) aufgrund von erhaltenen ersten Parameterwerten; und Senden von Steueranweisungen zu den zweiten Steuereinrichtungen.

8. Energiespeichersystem nach Anspruch 1, wobei das Energiespeichersystem außerdem einen dreiphasigen Wechselstrombus umfasst, ein erstes Ende von jedem Leistungswandlerzweig (A, B, C) mit einem einphasigen Wechselstrombus verbunden ist, und wobei zweite Enden der drei Leistungswandlerzweige (A, B, C) miteinander verbunden sind; oder

wobei das Energiespeichersystem außerdem einen dreiphasigen Wechselstrombus umfasst, und wobei die drei Leistungswandlerzweige (A, B, C) getrennt zwischen die Wechselstrombusse von jeweils zwei Phasen geschaltet sind; oder
wobei eine Spannung des Ausgleichsbusses geringer als oder gleich einer Ausgangsspannung der Batterieansammlung ist und größer als eine Spannung ist, die von dem Batteriepack (1022) an die Gleichstrom-Gleichstrom-Wandlerschaltung ausgegeben wird.

9. Ausgleichssteuerverfahren für ein Energiespeichersystem, wobei das Energiespeichersystem drei Leistungswandlerzweige (A, B, C) umfasst, wobei jeder Leistungswandlerzweig (A, B, C) eine Leistungswandlerschaltung (101) umfasst, und wobei ein erstes Ende der Leistungswandlerschaltung (101) mit einem Wechselstrombus verbunden ist; oder wobei jeder Leistungswandlerzweig (A, B, C) mindestens zwei in Reihe geschaltete Leistungswandlerschaltungen (101) umfasst, und wobei erste Enden der mindestens zwei Leistungswandlerschaltungen (101) in Reihe geschaltet sind und danach mit einem Wechselstrombus verbunden sind; wobei ein zweites Ende von jeder Leistungswandlerschaltung (101) mit mindestens einer Batterieansammlung (102) verbunden ist; wobei jede Batterieansammlung (102) mindestens zwei in Reihe geschaltete Energiespeichermodule umfasst, wobei jedes Energiespeichermodul eine Gleichstrom-Gleichstrom-Wandlerschaltung (1021) und einen Batteriepack (1022) umfasst, und wobei jeder Batteriepack (1022) mindestens zwei Batterien umfasst; wobei ein Ausgangsende von jedem Batteriepack (1022) mit einem Eingangsende einer entsprechenden Gleichstrom-Gleichstrom-Wandlerschaltung (1021) verbunden ist, und wobei ein Ausgangsende von jeder Gleichstrom-Gleichstrom-Wandlerschaltung (1021) mit einem Ausgleichsbus parallel geschaltet ist; und wobei das Verfahren umfasst:

Steuern von jeder Gleichstrom-Gleichstrom-Wandlerschaltung (1021), sodass eine elektrische Energie des Batteriepacks (1022) in der Batterieansammlung (102) ausgeglichen ist;
wobei jeder Batteriepack (1022), für den eine erste Abweichung zwischen dem ersten Parameterwert und dem ersten Durchschnittswert größer als ein erster voreingestellter Schwellenwert ist, ein erster auszugleichender Batteriepack (1022) ist, und wobei ein Batteriepack (1022), für den eine erste Abweichung zwischen dem ersten Parameterwert und dem ersten Durchschnittswert geringer als ein zweiter voreingestellter Schwellenwert ist, ein zweiter auszugleichender Batteriepack (1022) ist, wobei der erste voreingestellte Schwellenwert größer als der zweite voreingestellte Schwellenwert ist; und
wobei das Verfahren umfasst: Steuern einer Gleichstrom-Gleichstrom-Wandlerschaltung (1021), die mit dem ersten auszugleichenden Batteriepack (1022) verbunden ist, und einer Gleichstrom-Gleichstrom-Wandlerschaltung (1021), die mit dem zweiten auszugleichenden Batteriepack (1022) verbunden ist, sodass die elektrische Energie der Batteriepacks (1022) in der Batterieansammlung (102) ausgeglichen ist;
und wobei das Energiespeichersystem außerdem einen steuerbaren Schalter (K) umfasst, wobei ein Ausgleichsbus mit einem Bus der Batterieansammlung (102) verbunden ist, indem der steuerbare Schalter (K) verwendet wird, und wobei das Verfahren außerdem umfasst:

wenn ein Energiespeichermodul entladen wird und ein erster auszugleichender Batteriepack (1022) vorhanden ist, Steuern des steuerbaren Schalters (K), damit er geschlossen ist, Steuern einer Gleichstrom-Gleichstrom-Wandlerschaltung (1021), die dem ersten auszugleichenden Batteriepack (1022) entspricht, damit sie eine Stromquelle ist, und Steuern eines Stroms, damit er von dem ersten auszugleichenden Batteriepack (1022) zu dem Bus der Batterieansammlung (102) fließt; und
wenn das Energiespeichermodul aufgeladen wird und ein zweiter auszugleichender Batteriepack (1022) vorhanden ist, Steuern des steuerbaren Schalters (K), damit er geschlossen ist, Steuern einer Gleichstrom-Gleichstrom-Wandlerschaltung (1021), die dem zweiten auszugleichenden Batteriepack (1022) entspricht, damit sie eine Stromquelle ist, und Steuern eines Stroms, damit er von dem Bus der Batterieansammlung (102) zu dem ersten auszugleichenden Batteriepack fließt.

**Revendications**

1. Système de stockage d'énergie, comprenant un appareil de commande et trois branches de conversion de puissance (A, B, C), dans lequel chaque branche de conversion de puissance (A, B, C) comprend un circuit de conversion de puissance (101), et une première extrémité du circuit de conversion de puissance (101) est connectée à un bus à courant alternatif ; ou

chaque branche de conversion de puissance (A, B, C) comprend au moins deux circuits de conversion de puissance (101) connectés en série, et des premières extrémités des au moins deux circuits de conversion de puissance (101) sont connectées en série et sont ensuite connectées à un bus à courant alternatif ;
une seconde extrémité de chaque circuit de conversion de puissance (101) est connectée à au moins un groupe de batteries (102) ;
chaque groupe de batteries (102) comprend au moins deux modules de stockage d'énergie connectés en série, chaque module de stockage d'énergie comprend un circuit de conversion de courant continu/courant continu (1021) et un bloc batterie (1022), et chaque bloc batterie (1022) comprend au moins deux batteries ; une extrémité de sortie de chaque bloc batterie (1022) est connectée à une extrémité d'entrée d'un circuit correspondant de conversion de courant continu/courant continu (1021), et une extrémité de sortie de chaque circuit de conversion de courant continu/courant continu (1021) est connectée en parallèle à un bus d'équilibrage ;
le circuit de conversion de puissance (101) est configuré pour : convertir un courant continu fourni par le groupe de batteries (102) en un courant alternatif et ensuite transmettre le courant alternatif à un réseau de puissance à courant alternatif, ou convertir un courant alternatif obtenu à partir d'un réseau de puissance à courant alternatif en un courant continu et ensuite charger le groupe de batteries (102) ; et l'appareil de commande est configuré pour commander chaque circuit de conversion de courant continu/courant continu (1021), pour que de l'énergie électrique de blocs batteries (1022) dans le groupe de batteries (102) soit équilibrée ;
dans lequel

a) chaque bloc batterie (1022) pour lequel un premier écart entre la première valeur de paramètre et la première valeur moyenne est supérieur à un premier seuil prédéfini est un premier bloc batterie destiné à être équilibré (1022), et un bloc batterie (1022) pour lequel un premier écart entre la première valeur de paramètre et la première valeur moyenne est inférieur à un deuxième seuil prédéfini est un deuxième bloc batterie destiné à être équilibré (1022) ; et
l'appareil de commande est spécifiquement configuré pour : commander un circuit de conversion de courant continu/courant continu (1021) connecté au premier bloc batterie destiné à être équilibré (1022) et un circuit de conversion de courant continu/courant continu (1021) connecté au deuxième bloc batterie destiné à être équilibré (1022) ; et le premier seuil prédéfini est supérieur au deuxième seuil prédéfini ; ou
b) l'appareil de commande est spécifiquement configuré pour : obtenir une différence entre une valeur maximum et une valeur minimum dans des premières valeurs de paramètre de blocs batteries (1022) ; lorsque la différence est supérieure ou égale à un troisième seuil prédéfini, déterminer qu'un bloc batterie (1022) avec une première valeur de paramètre maximum est un premier bloc batterie destiné à être équilibré (1022) ; déterminer qu'un bloc batterie (1022) avec une première valeur de paramètre minimum est un deuxième bloc batterie destiné à être équilibré (1022), et commander un circuit de conversion de courant continu/courant continu (1021) connecté au premier bloc batterie destiné à être équilibré (1022) et un circuit de conversion de courant continu/courant continu (1021) connecté au deuxième bloc batterie destiné à être équilibré ;

dans lequel le système de stockage d'énergie comprend en outre un commutateur commandable (K), dans lequel le bus d'équilibrage est connecté à un bus du groupe de batteries (102) en utilisant le commutateur commandable (K) ;
l'appareil de commande est en outre configuré pour commander le commutateur commandable (K) sur la base des premières valeurs de paramètre des blocs batteries (1022) et
dans lequel, lorsque le module de stockage d'énergie se décharge et un premier bloc batterie destiné à être équilibré (1022) existe, l'appareil de commande commande le commutateur commandable (K) pour qu'il soit fermé, commande un circuit de conversion de courant continu/courant continu (1021), correspondant au premier bloc batterie destiné à être équilibré (1022), pour qu'il soit une source de courant, et commande un courant pour qu'il circule depuis le premier bloc batterie destiné à être équilibré (1022) jusqu'au bus du groupe de batteries (102) (102) ; et, lorsque le module de stockage d'énergie est chargé et un deuxième bloc batterie destiné à être équilibré (1022) existe, l'appareil de commande commande le commutateur commandable (K) pour qu'il soit fermé, commande un circuit de conversion de courant continu/courant continu (1021), correspondant au deuxième bloc batterie destiné à être équilibré (1022), pour qu'il soit une source de courant, et commande un courant pour qu'il circule depuis le bus du groupe de batteries (102) jusqu'au premier bloc batterie destiné à être équilibré.

2. Système de stockage d'énergie selon la revendication 1, dans lequel, lorsque le module de stockage d'énergie se décharge et au moins deux premiers blocs batteries destinés à être équilibrés (1022) existent, l'appareil de commande est en outre configuré pour déterminer, sur la base d'une amplitude de premiers écarts correspondant aux premiers blocs batteries destinés à être équilibrés (1022), une amplitude de courants d'équilibrage de circuits de conversion de courant continu/courant continu connectés aux premiers blocs batteries destinés à être équilibrés (1022) ; lorsque le module de stockage d'énergie est chargé et au moins deux deuxièmes blocs batteries destinés à être équilibrés (1022) existent, l'appareil de commande est en outre configuré pour déterminer, sur la base d'une amplitude de premiers écarts correspondant aux deuxièmes blocs batteries destinés à être équilibrés (1022), une amplitude de courants d'équilibrage de circuits de conversion de courant continu/courant continu connectés aux deuxièmes blocs batteries destinés à être équilibrés (1022) ; et l'amplitude des courants d'équilibrage est positivement corrélée avec l'amplitude des premiers écarts.

3. Système de stockage d'énergie selon l'une quelconque des revendications 1 et 2, dans lequel la seconde extrémité de chaque circuit de conversion de puissance (101) est connectée à au moins deux groupes de batteries ; et des bus des au moins deux groupes de batteries sont connectés en parallèle et sont ensuite connectés au bus d'équilibrage en utilisant le commutateur commandable (K).

4. Système de stockage d'énergie selon la revendication 3, dans lequel l'appareil de commande est en outre configuré pour : déterminer qu'une valeur moyenne de premières valeurs de paramètre des au moins deux groupes de batteries est une seconde valeur moyenne ; et, lorsqu'un deuxième écart entre la première valeur de paramètre du groupe de batteries (102) et la seconde valeur moyenne est supérieur à un quatrième seuil prédéfini, commander le commutateur commandable (K) pour qu'il soit ouvert, commander un circuit de conversion de courant continu/courant continu (1021) du groupe de batteries (102) dont la première valeur de paramètre est supérieure à la seconde valeur moyenne pour qu'il soit une source de tension, commander un circuit de conversion de courant continu/courant continu (1021) du groupe de batteries (102) dont la première valeur de paramètre est inférieure à la seconde valeur moyenne pour qu'il soit une source de courant, et commander un courant pour qu'il circule depuis le groupe de batteries (102), dont la première valeur de paramètre est supérieure à la seconde valeur moyenne, jusqu'au groupe de batteries (102) dont la première valeur de paramètre est inférieure à la seconde valeur moyenne.

5. Système de stockage d'énergie selon l'une quelconque des revendications 1 à 4, dans lequel la première valeur de paramètre est une valeur d'état de charge SOC ou une valeur de tension, dans lequel la première valeur de paramètre est une valeur d'état de charge SOC, et l'appareil de commande est en outre configuré pour : déterminer qu'une valeur moyenne de premières valeurs de paramètre des au moins deux groupes de batteries est une seconde valeur moyenne ; et, lorsqu'un deuxième écart entre une première valeur de paramètre d'un groupe de batteries (102) et la seconde valeur moyenne est supérieur à un quatrième seuil prédéfini, commander le commutateur commandable (K) pour qu'il soit fermé, déterminer qu'un groupe de batteries (102), dont la première valeur de paramètre est supérieure à la seconde valeur moyenne, est un groupe de batteries destiné à être équilibré, déterminer que des blocs batteries (1022), qui sont dans le groupe de batteries destiné à être équilibré (102) et dont les premières valeurs de paramètre sont supérieures à la seconde valeur moyenne, sont des troisièmes blocs batteries destinés à être équilibrés (1022), et commander des circuits de conversion de courant continu/courant continu connectés aux troisièmes blocs batteries destinés à être équilibrés (1022), pour que les troisièmes blocs batteries destinés à être équilibrés (1022) se déchargent.

6. Système de stockage d'énergie selon la revendication 5, dans lequel l'appareil de commande obtient des troisièmes écarts entre des premières valeurs de paramètre des troisièmes blocs batteries destinés à être équilibrés (1022) et la seconde valeur moyenne ; et détermine, sur la base des troisièmes écarts, des courants d'équilibrage des circuits de conversion de courant continu/courant continu connectés aux troisièmes blocs batteries destinés à être équilibrés (1022), dans lequel une amplitude des courants d'équilibrage des circuits de conversion de courant continu/courant continu connectés aux troisièmes blocs batteries destinés à être équilibrés (1022) est positivement corrélée avec une amplitude des troisièmes écarts correspondants.

7. Système de stockage d'énergie selon l'une quelconque des revendications 1 à 6, dans lequel l'appareil de commande comprend une première unité de commande et une seconde unité de commande ;

une quantité de secondes unités de commande est la même qu'une quantité de blocs batteries (1022) dans le groupe de batteries (102) (102) ;

chaque seconde unité de commande est configurée pour : obtenir une première valeur de paramètre d'un bloc batterie (1022) ; envoyer la première valeur de paramètre à la première unité de commande ; et commander un circuit correspondant de conversion de courant continu/courant continu (1021) selon une instruction de commande envoyée par la première unité de commande ; et

la première unité de commande est configurée pour : déterminer le premier bloc batterie destiné à être équilibré (1022) et le deuxième bloc batterie destiné à être équilibré (1022) sur la base de premières valeurs de paramètre obtenues ; et envoyer des instructions de commande aux secondes unités de commande.

8. Système de stockage d'énergie selon la revendication 1, dans lequel le système de stockage d'énergie comprend en outre un bus à courant alternatif triphasé, une première extrémité de chaque branche de conversion de puissance (A, B, C) est connectée à un bus à courant alternatif monophasé, et des secondes extrémités des trois branches de conversion de puissance (A, B, C) sont connectées les unes aux autres ; ou

le système de stockage d'énergie comprend en outre un bus à courant alternatif triphasé, et les trois branches de conversion de puissance (A, B, C) sont séparément connectées entre des bus à courant alternatif de chaque paire de phases ; ou

une tension du bus d'équilibrage est inférieure ou égale à une tension de sortie du groupe de batteries, et est supérieure à une tension fournie en sortie par le bloc batterie (1022) au circuit de conversion de courant continu/courant continu.

9. Procédé de commande d'équilibrage pour un système de stockage d'énergie, dans lequel le système de stockage d'énergie comprend trois branches de conversion de puissance (A, B, C), chaque branche de conversion de puissance (A, B, C) comprend un circuit de conversion de puissance (101), et une première extrémité du circuit de conversion de puissance (101) est connectée à un bus à courant alternatif ; ou chaque branche de conversion de puissance (A, B, C) comprend au moins deux circuits de conversion de puissance (101) connectés en série, et des premières extrémités des au moins deux circuits de conversion de puissance (101) sont connectées en série et sont ensuite connectées à un bus à courant alternatif ; une seconde extrémité de chaque circuit de conversion de puissance (101) est connectée à au moins un groupe de batteries (102) (102) ; chaque groupe de batteries (102) comprend au moins deux modules de stockage d'énergie connectés en série, chaque module de stockage d'énergie comprend un circuit de conversion de courant continu/courant continu (1021) et un bloc batterie (1022), et chaque bloc batterie (1022) comprend au moins deux batteries ; une extrémité de sortie de chaque bloc batterie (1022) est connectée à une extrémité d'entrée d'un circuit correspondant de conversion de courant continu/courant continu (1021), et une extrémité de sortie de chaque circuit de conversion de courant continu/courant continu (1021) est connectée en parallèle à un bus d'équilibrage ; et le procédé comprend :

la commande de chaque circuit de conversion de courant continu/courant continu (1021), pour que de l'énergie électrique de blocs batteries (1022) dans le groupe de batteries (102) soit équilibrée ;

dans lequel chaque bloc batterie (1022) pour lequel un premier écart entre la première valeur de paramètre et la première valeur moyenne est supérieur à un premier seuil prédéfini est un premier bloc batterie destiné à être équilibré (1022), et un bloc batterie (1022) pour lequel un premier écart entre la première valeur de paramètre et la première valeur moyenne est inférieur à un deuxième seuil prédéfini est un deuxième bloc batterie destiné à être équilibré (1022), dans lequel le premier seuil prédéfini est supérieur au deuxième seuil prédéfini ; et

dans lequel le procédé comprend la commande d'un circuit de conversion de courant continu/courant continu (1021) connecté au premier bloc batterie destiné à être équilibré (1022) et d'un circuit de conversion de courant continu/courant continu (1021) connecté au deuxième bloc batterie destiné à être équilibré (1022), pour que l'énergie électrique des blocs batteries (1022) dans le groupe de batteries (102) soit équilibrée ;

et dans lequel le système de stockage d'énergie comprend en outre un commutateur commandable (K), un bus d'équilibrage est connecté à un bus du groupe de batteries (102) en utilisant le commutateur commandable (K), et le procédé comprend en outre :

lorsqu'un module de stockage d'énergie se décharge et un premier bloc batterie destiné à être équilibré (1022) existe, la commande du commutateur commandable (K) pour qu'il soit fermé, la commande d'un circuit de conversion de courant continu/courant continu (1021), correspondant au premier bloc batterie destiné à être équilibré (1022), pour qu'il soit une source de courant, et la commande d'un courant pour qu'il circule depuis le premier bloc batterie destiné à être équilibré (1022) jusqu'au bus du groupe de batteries (102) (102) ; et

lorsque le module de stockage d'énergie est chargé et un deuxième bloc batterie destiné à être équilibré (1022) existe, la commande du commutateur commandable (K) pour qu'il soit fermé, la commande d'un circuit de conversion de courant continu/courant continu (1021), correspondant au deuxième bloc batterie destiné à être équilibré (1022), pour qu'il soit une source de courant, et la commande d'un courant pour qu'il circule depuis le bus du groupe de batteries (102) jusqu'au premier bloc batterie destiné à être équilibré.

FIG. 1

FIG. 2A

A

B

C

La

101 102

Power conversion circuit | + | Battery cabinet
| − |

101 102

M

Power conversion circuit | + | Battery cabinet
| − |

101 102

Power conversion circuit | + | Battery cabinet
| − |

Lb

101 102

Power conversion circuit | + | Battery cabinet
| − |

101 102

Power conversion circuit | + | Battery cabinet
| − |

101 102

Power conversion circuit | + | Battery cabinet
| − |

Lc

101 102

Power conversion circuit | + | Battery cabinet
| − |

101 102

Power conversion circuit | + | Battery cabinet
| − |

101 102

Power conversion circuit | + | Battery cabinet
| − |

FIG. 2B

FIG. 3

102

Direct current/Direct current conversion circuit 1021

Direct current/Direct current conversion circuit 1021

Direct current/Direct current conversion circuit 1021

LP

LN

1022

1022

1022

+

−

FIG. 4

102

Direct current/ Direct current conversion circuit 1021

Direct current/ Direct current conversion circuit 1021

Direct current/ Direct current conversion circuit 1021

LP

LN

K

1022

1022

1022

+

−

FIG. 5

102

1022       1022       1022

+ ⊣⊢ ••• + ⊣⊢    + ⊣⊢ ••• + ⊣⊢  •••  + ⊣⊢ ••• + ⊣⊢

1021       1021       1021

| Direct current/ Direct current conversion circuit | Direct current/ Direct current conversion circuit | Direct current/ Direct current conversion circuit |

K

LP
LN

1021       1021       1021

| Direct current/ Direct current conversion circuit | Direct current/ Direct current conversion circuit | Direct current/ Direct current conversion circuit |

1022       1022       1022

+ ⊣⊢ ••• + ⊣⊢    + ⊣⊢ ••• + ⊣⊢  •••  + ⊣⊢ ••• + ⊣⊢

FIG. 6

S701

Determine that an average value of first parameter values of battery packs is a first average value

S702

Determine that each battery pack for which a first deviation between a first parameter value and the first average value is greater than a first preset threshold is a first to-be-balanced battery pack, and determine that a battery pack for which a first deviation between a first parameter value and the first average value is less than a second preset threshold is a second to-be-balanced battery pack, where the first preset threshold is greater than the second preset threshold

S701

Control a direct current/direct current conversion circuit connected to the first to-be-balanced battery pack and a direct current/direct current conversion circuit connected to the second to-be-balanced battery pack, so that electric energy of the battery packs in a battery cluster is balanced

FIG. 7

S801

Obtain a difference between a maximum value and a minimum value in first parameter values of battery packs

S802

When the difference is greater than or equal to a third preset threshold, determine that a battery pack with a maximum first parameter value is a first to-be-balanced battery pack, and determine that a battery pack with a minimum first parameter value is a second to-be-balanced battery pack

S803

Control a direct current/direct current conversion circuit connected to the first to-be-balanced battery pack and a direct current/direct current conversion circuit connected to the second to-be-balanced battery pack, so that electric energy of the battery packs in a battery cluster is balanced

FIG. 8

S901

When an energy storage module discharges and a first to-be-balanced battery pack exists, control a controllable switch to be closed, control a direct current/direct current conversion circuit corresponding to the first to-be-balanced battery pack to be a current source, and control a current to flow from the first to-be-balanced battery pack to a bus of a battery cluster

S902

When the energy storage module is charged and a second to-be-balanced battery pack exists, control the controllable switch to be closed, control a direct current/direct current conversion circuit corresponding to the second to-be-balanced battery pack to be a current source, and control a current to flow from the bus of the battery cluster to the first to-be-balanced battery pack

FIG. 9

S1001

Determine that an average value of first parameter values of at least two battery clusters is a second average value

S1002

When a second deviation between a first parameter value of a battery cluster and the second average value is greater than a fourth preset threshold, control a controllable switch to be open

S1003

Control a direct current/direct current conversion circuit of a battery cluster whose first parameter value is greater than the second average value to be a voltage source, control a direct current/direct current conversion circuit of a battery cluster whose first parameter value is less than the second average value to be a current source, and control a current to flow from the battery cluster whose first parameter value is greater than the second average value to the battery cluster whose first parameter value is less than the second average value

FIG. 10

S1001

Determine that an average value of first parameter values of at least two battery clusters is a second average value

S1002

When a second deviation between a first parameter value of a battery cluster and the second average value is greater than a fourth preset threshold, control a controllable switch to be closed

S1003

Determine that a battery cluster whose first parameter value is greater than the second average value is a to-be-balanced battery cluster, determine that battery packs that are in the to-be-balanced battery cluster and whose first parameter values are greater than the second average value are third to-be-balanced battery packs, and control direct current/direct current conversion circuits connected to the third to-be-balanced battery packs, so that the third to-be-balanced battery packs discharge

FIG. 11

1200

Photovoltaic power generation end

A

B

C

La

Lb

Lc

101 102
Power conversion circuit + Battery cabinet −

101 102
Power conversion circuit + Battery cabinet −

101 102
Power conversion circuit + Battery cabinet −

101 102
Power conversion circuit + Battery cabinet −

101 102
Power conversion circuit + Battery cabinet −

101 102
Power conversion circuit + Battery cabinet −

M

101 102
Power conversion circuit + Battery cabinet −

101 102
Power conversion circuit + Battery cabinet −

101 102
Power conversion circuit + Battery cabinet −

N

FIG. 12

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140042815 A1

- EP 2779348 A2

**Non-patent literature cited in the description**

- Multilayer SOH Equalization Scheme for MMC Battery Energy Storage System. **A ZHAN et al.** IEEE TRANSACTIONS ON POWER ELECTRONICS. INSTITUTE OF ELECTRICAL AND ELECTRONICS ENGINEERS, 01 May 2020, vol. 35, 13514-13527